(19) Europäisches Patentamt
European Patent Office
Office européen des brevets

(11) EP 2 771 373 B1

(12) # EUROPEAN PATENT SPECIFICATION

(45) Date of publication and mention of the grant of the patent:
**26.04.2017 Bulletin 2017/17**

(21) Application number: **12844490.8**

(22) Date of filing: **04.10.2012**

(51) Int Cl.:
***C08F 8/36*** (2006.01) ***C08J 3/18*** (2006.01)
***C08K 5/00*** (2006.01) ***C08K 5/17*** (2006.01)

(86) International application number:
**PCT/US2012/058604**

(87) International publication number:
**WO 2013/062728 (02.05.2013 Gazette 2013/18)**

(54) **METHOD FOR MELT PROCESSING SULFONATED BLOCK COPOLYMERS AND ARTICLES COMPRISING OPTIONALLY AMINE MODIFIED SULFONATED BLOCK COPOLYMERS**

VERFAHREN ZUR SCHMELZVERARBEITUNG VON SULFONIERTEN BLOCKCOPOLYMEREN UND ARTIKELN MIT OPTIONAL AMINMODIFIZIERTEN SULFONIERTEN BLOCKCOPOLYMEREN

PROCÉDÉ DE TRAITEMENT À L'ÉTAT FONDU DE COPOLYMÈRES À BLOCS SULFONÉS ET ARTICLES COMPRENANT DES COPOLYMÈRES À BLOCS SULFONÉS FACULTATIVEMENT MODIFIÉS PAR AMINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2011 US 201113280870**

(43) Date of publication of application:
**03.09.2014 Bulletin 2014/36**

(73) Proprietor: **Kraton Polymers U.S. LLC**
**Houston, Texas 77084 (US)**

(72) Inventor: **WEI, Xiangyun**
**Katy, Texas 77494 (US)**

(74) Representative: **EP&C**
**P.O. Box 3241**
**2280 GE Rijswijk (NL)**

(56) References cited:
**US-A1- 2003 055 179**
**US-A1- 2011 065 021**
**US-A1- 2011 086 982**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 771 373 B1

## Description

### Field of the Disclosure

Sulfonated block copolymers and certain derivatives thereof exhibit extraordinary properties with regard to dimensional stability, water transport and selective ion transport. Accordingly, articles which comprise such block copolymers are advantageous in a variety of applications, e.g., electrically driven water separation processes as well as osmotically driven separation processes such as forward osmosis, filtration, "blue energy" applications, and fuel cells. However, sulfonated block copolymers have no melt index, and thus are not melt-formable, due to the strong interaction of the ionic groups contained therein. The production of articles comprising the sulfonated block copolymers, therefore, is restricted to casting methods.

The present disclosure provides a method for melt processing a sulfonated block copolymer in which the sulfonic acid or sulfonate functional groups are partially or completely neutralized by an amine, and to articles obtained by the method. The amine neutralized sulfonated block copolymers have a melt flow index which renders them plastically formable at elevated temperatures. Thus, the amine neutralized block copolymers can be shaped, i.e., by thermal methods such as molding and melt processing, and can be processed into a broad variety of shapes including shapes which cannot be obtained by casting methods, e.g., fibers and hollow bodies such tubes. Moreover, the shaped articles which are obtained by molding a composition comprising the amine neutralized sulfonated block copolymer may be treated to convert the amine neutralized groups of the block copolymer into $-SO_3H$ groups thus giving access to shaped articles which comprise the sulfonated block copolymer(s) employed in the preparation of the amine neutralized block copolymer(s).

### Background of the Disclosure

The preparation of styrenic block copolymers is well known in the art. Generally, styrenic block copolymers ("SBC") can comprise internal polymer blocks and terminal end polymer blocks comprising chemically different monomer types thereby providing particular desirable properties. As an example, in a more common form, SBC's may have internal blocks of conjugated diene and external blocks having aromatic alkenyl arenes. The interaction of the differing properties of the polymer blocks allow for different polymer characteristics to be obtained. For example, the elastomer properties of internal conjugated diene blocks along with the "harder" aromatic alkenyl arenes external blocks together form polymers which are useful for an enormous variety of applications. Such SBC's can be prepared through sequential polymerization and/or through coupling reactions.

It is known also that SBC's can be functionalized in order to further modify their characteristics. An example of this is the addition of sulfonic acid or sulfonate ester functional groups to the polymer backbone. One of the first such sulfonated block copolymers is disclosed, for example, in US 3,577,357 to Winkler. The resulting block copolymer was characterized as having the general configuration A-B-(B-A)1-5, wherein each A is a non-elastomeric sulfonated monovinyl arene polymer block and each B is a substantially saturated elastomeric alpha-olefin polymer block, said block copolymer being sulfonated to an extent sufficient to provide at least 1% by weight of sulfur in the total polymer and up to one sulfonated constituent for each monovinyl arene unit. The sulfonated polymers can be used as such, or can be used in the form of their acid, alkali metal salt, ammonium salt or amine salt. According to Winkler, a polystyrene-hydrogenated polyisoprene-polystyrene triblock copolymer was treated with a sulfonating agent comprising sulfur trioxide/triethyl phosphate in 1,2-dichloroethane. The sulfonated block copolymers are described as having water absorption characteristics that might be useful in water purification membranes, but were later found not to be castable into films (US 5,468,574).

More recently, US 7,737,224 to Willis et al., disclosed the preparation of sulfonated polymer and inter alia illustrated a sulfonated block copolymer that is solid in water comprising at least two polymer end blocks and at least one saturated polymer interior block wherein each end block is a polymer block resistant to sulfonation and at least one interior block is a saturated polymer block susceptible to sulfonation, and wherein at least one interior block is sulfonated to the extent of 10 to 100 mol percent of the sulfonation susceptible monomer in the block. The sulfonated block copolymers are described as being able to transport high amounts of water vapor while at the same time having good dimensional stability and strength in the presence of water, and as being valuable materials for end use applications which call for a combination of good wet strength, good water and proton transport characteristics, good methanol resistance, easy film or membrane formation, barrier properties, control of flexibility and elasticity, adjustable hardness, and thermal/oxidative stability.

Additionally, WO 2008/089332 to Dado et al., discloses a process for preparing sulfonated block copolymers illustrating, e.g., the sulfonation of a precursor block polymer having at least one end block A and at least one interior block B wherein each A block is a polymer block resistant to sulfonation and each B block is a polymer block susceptible to sulfonation wherein said A and B blocks are substantially free of olefinic unsaturation. The precursor block polymer

was reacted with an acyl sulfate in a reaction mixture further comprising at least one non-halogenated aliphatic solvent. According to Dado et al., the process results in a reaction product which comprised micelles of sulfonated polymer and/or other polymer aggregates of definable size and distribution. More recently, WO 2009/137678 to Handlin et al. disclosed an improved process for preparing sulfonated block copolymers and esters thereof as well as membranes comprising them.

It has also been reported that sulfonated polymers may be neutralized with a variety of compounds. US 5,239,010 to Pottick et al., and US 5,516,831 to Balas et al., for example, indicate that styrene blocks with sulfonic acid functional groups may be neutralized by reacting the sulfonated block copolymer with an ionizable metal compound to obtain a metal salt.

Additionally, US 7,737,224 to Willis et al. indicates the at least partial neutralization of sulfonated block copolymers with a variety of base materials including, for example, ionizable metal compounds as well as various amines. More specific amine neutralized sulfonated block copolymers are described in US 2011/0086982 to Willis et al. Membranes comprising these amine neutralized sulfonated block copolymers transport water and are dimensionally stable under wet conditions.

## Summary of the Disclosure

In a first aspect, the present disclosure generally provides for a method of producing a shaped article which comprises:

i) providing a composition comprising an amine neutralized sulfonated block copolymer having a melt flow index of at least 0.5 g/10 min at 230°C and 5 kg load according to ASTM 1238, comprising at least two polymer end blocks A and at least one polymer interior block B, wherein
each A block contains essentially no sulfonic acid or sulfonate functional groups and
each B block comprises sulfonation susceptible monomer units and from 10 to 100 mol% sulfonic acid or sulfonate ester functional groups based on the number of the sulfonation susceptible monomer units, and wherein the sulfonic acid or sulfonate ester functional groups are partially or completely neutralized by an amine, wherein the amine is of formula (I)

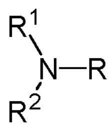

(I)

wherein

R and $R^1$, each independently, represents hydrogen or a hydrocarbon group, and
$R^2$ represents a hydrocarbon group that can be straight chain, branched, or cyclic and can be saturated, partially unsaturated or aromatic, or
R and $R^1$, each independently, represents hydrogen or hydrocarbon group, and $R^2$ represents a group

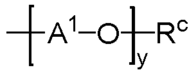

wherein

$A^1$ in each case independently, is a straight chain or branched alkylene moiety,
$R^c$ is an alkyl, and
y is a number from 2 to 100, or
$R^1$ and $R^2$, together with the nitrogen to which they are bonded form an optionally substituted hetero cycle consisting of carbon and nitrogen, wherein the amine is of formula (Ia)

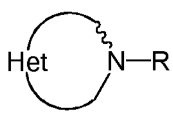

(Ia)

wherein

represents a single or double bond
R is absent when represents a double bond, or is hydrogen or a hydrocarbon group when represents a single bond, and
Het together with the nitrogen to which it is bonded represents an optionally substituted 5- or 6-membered hetero cycle having, in addition to the nitrogen ring member, 4 or 5 ring members selected from the group consisting of at least 2 and at most 5 carbon ring members, 0 to 3 nitrogen ring members, wherein optional substituents of the hetero cycle groups can be straight chain, branched, or cyclic and be be saturated, partially unsaturated or aromatic;

ii) heating the composition to a temperature at which the amine neutralized sulfonated block copolymer is moldable,
iii) shaping the composition obtained in (ii), by thermal methods including molding and melt processing;
iv) cooling the shaped composition obtained in (iii), and
v) optionally converting the amine neutralized sulfonic acid or sulfonate ester functional groups present in the cooled and shaped article into $-SO_3H$ group(s).

In a second aspect, the present disclosure provides for the method in accordance with the foregoing aspect wherein from 85 to 100% of the sulfonic acid or sulfonate ester functional groups are neutralized by the amine.
In a third aspect, the present disclosure provides for a shaped article obtained by the method of any one of the foregoing aspects one to two.
In a fourth aspect, the present disclosure provides for the shaped article in accordance with the foregoing aspect three which is in form of a sheet, fiber, or hollow body.
In a fifth aspect, the present disclosure provides for the shaped article in accordance with either one of the foregoing aspects three or four which is in form of a membrane or film.
In a sixth aspect, the present disclosure provides for the membrane or film in accordance with the foregoing aspect five which has at least one of the characteristics (a), (b) and (c):

(a) a conductivity of at least 5 mS/cm;
(b) an anion exchange selectivity of at least 80%;
(c) a water absorption capacity of at most 20% by weight, based on the dry weight of the article.

In a seventh aspect, the present disclosure provides for an apparatus selected from the group consisting of fuel cells, filtration devices, devices for controlling humidity, devices for forward electrodialysis, devices for reverse electrodialysis, devices for pressure retarded osmosis, devices for forward osmosis, devices for reverse osmosis, devices for selectively adding water, devices for selectively removing water, devices for capacitive deionization, devices for molecular filtration, devices for removing salt from water, devices for treating produced water from hydraulic fracturing applications, devices for ion transport applications, devices for softening water, and batteries, and comprising the shaped article in accordance with any one of the foregoing aspects three to six.
In an eighth aspect, the present disclosure provides for an electro-deionization assembly comprising at least one anode, at least one cathode, and one or more membrane(s) wherein at least one membrane is the membrane in accordance with either one of the foregoing aspects five or six.
In a ninth aspect, the present disclosure provides for an article comprising a substrate and a coating, wherein the coating is the membrane or film in accordance with either one of the foregoing aspects five or six.
In a tenth aspect, the present disclosure provides for the article in accordance with the foregoing aspect nine wherein the substrate is a natural or synthetic, woven or non-woven material, or a mixture of two or more thereof.

## Brief Description of the Drawings

FIG. 1 is a schematic diagram of a set-up for measuring membrane resistance.
FIG. 2 illustrates how to obtain membrane resistance from measurements taken in a set-up according to FIG. 1.
FIG. 3 schematically illustrates the experiment set-up for measuring the permselectivity.
FIG. 4 schematically illustrates the experiment set-up for measuring the permeability.
FIG. 5 schematically illustrates a desalination cell.

## Detailed Description

A detailed description of embodiments of the present invention is disclosed herein; however, it is to be understood that the disclosed embodiments are merely exemplary of the invention and that the invention may be embodied in various and alternative forms of the disclosed embodiments. Therefore, specific structural and functional details which are addressed in the embodiments disclosed herein are not to be interpreted as limiting, but merely as a basis for the claims and as a representative basis for teaching one skilled in the art to variously employ the present invention.

Unless specifically stated otherwise, all technical terms used herein have the meaning as commonly understood by those skilled in the art.

Moreover, unless specifically stated otherwise, the following expressions as used herein are understood to have the following meanings:

The expression "sulfonated block copolymer" as used herein refers to a sulfonated block copolymer which contains sulfonic acid and/or sulfonate ester groups and which essentially has not been reacted with an amine, metal or other polar compound and.

The expressions "neutralized sulfonated block copolymer" and "neutralized block copolymer" as used herein refer to a sulfonated block copolymer wherein the sulfonic acid and/or sulfonate ester groups are at least partially neutralized by an amine. The expressions in particular encompass modified sulfonated block copolymers as hereinafter defined.

The expressions "modified sulfonated block copolymer" and "modified block copolymer" as used herein refer to a sulfonated block copolymer wherein the sulfonic acid and/or sulfonate ester groups are at least partially converted into functional groups of formula (IIa).

Unless indicated otherwise, the expression "functionalized block copolymers" or the singular thereof as used herein collectively refers to sulfonated block copolymers, neutralized sulfonated block copolymers, and modified sulfonated block copolymers.

Unless indicated otherwise, the expressions "precursor block copolymer" or "precursor polymer" as used herein refers to an optionally hydrogenated block copolymer that has not been sulfonated and/or functionalized.

Unless specifically stated otherwise, the expression "%-wt." as used herein refers to the number of parts by weight of monomer per 100 parts by weight of polymer on a dry weight basis, or the number of parts by weight of ingredient per 100 parts by weight of specified composition.

Unless specifically stated otherwise, the expression "molecular weight" as used herein and relating to a polymer refers to the number average molecular weight.

Unless specifically stated otherwise, the expression "about" as used herein in connection with a numerical value is intended to indicate that the respective numerical value may vary by $\pm 5\%$, or by $\pm 2.5\%$, or by $\pm 1\%$, or by $\pm 0\%$.

The expression "equilibrium" as used herein in the context of water absorption refers to the state in which the rate of water absorption by a functionalized block copolymer is in balance with the rate of water loss by the functionalized block copolymer. The state of equilibrium can generally be reached by immersing the functionalized block copolymer in water for a 24 hour period (one day). The equilibrium state may be reached also in other wet environments, however the period of time to reach equilibrium may differ.

The expression "hydrated" block copolymer as used herein refers to a functionalized block copolymer which has absorbed a significant amount of water.

The expression "wet state" as used herein refers to the state at which a functionalized block copolymer has reached equilibrium or has been immersed in water for a period of 24 hours.

The expression "dry state" as used herein refers to the state of hydration of a functionalized block copolymer which has absorbed essentially no or only insignificant amounts of water. For example, a functionalized block copolymer which is merely in contact with the atmosphere is considered to be in the dry state.

Unless specifically stated otherwise, the expression "solution" as used herein refers to a liquid, uniformly dispersed mixture at the molecular or ionic level of one or more substances (the solute) in one or more liquid substances (the solvent).

Unless specifically stated otherwise, the expression "dispersion" as used herein refers to a system having a continuous, liquid phase and at least one discontinuous phase. The discontinuous phase may be made up by solid, finely divided particles and/or by liquid droplets, including colloidal particles and micelles. The expression "dispersion" as used herein in particular includes systems in which at least one discontinuous phase is in form of micelles. Also, where the discontinuous phase(s) is(are) exclusively made up by liquid droplets, the expression "dispersion" in particular encompasses "emulsion." A person of ordinary skill will readily appreciate that there are no sharp differences between dispersions, colloidal or micellar solutions and solutions on a molecular level. Thus, a dispersion of micelles may also herein be referred to as a solution of micelles.

The expression "engineering thermoplastic resin" as used herein encompasses the various polymers such as for example thermoplastic polyester, thermoplastic polyurethane, poly(aryl ether) and poly(aryl sulfone), polycarbonate, acetal resin, polyamide, halogenated thermoplastic, nitrile barrier resin, poly(methyl methacrylate) and cyclic olefin copolymers, and further defined in US 4,107,131.

With respect to all ranges disclosed herein, such ranges are intended to include any combination of the mentioned upper and lower limits even if the particular combination is not specifically listed.

It is well-recognized that continuous melt processibility provides a significant reduction in manufacturing cost over processes which depend upon casting and drying of solutions and dispersions. It is especially beneficial to be able to produce articles of varying shapes in a single processing step rather than through numerous solvent handling steps. However, the sulfonated block copolymers known in the art do not exhibit melt processibility due to the strong ionic interaction of the sulfonic acid or sulfonate ester groups.

According to one aspect disclosed herein it has surprisingly been found that sulfonated block copolymers in which the sulfonic acid or sulfonate ester groups are partially or completely neutralized by an amine have a melt flow index which renders them plastically formable at elevated temperatures. Thus, the neutralized block copolymers can be shaped, i.e., by thermal methods such as molding and melt processing, to obtain articles which cannot be obtained by casting methods. Correspondingly, the neutralized block copolymers can be shaped into membranes or films, e.g., by melt-pressing methods. According to several embodiments disclosed herein is has been found that the ion and water transporting articles which are obtained by melt processing of compositions comprising the neutralized sulfonated block copolymers can be converted into corresponding articles comprising the non-neutralized, i.e., the sulfonated block copolymers. In such embodiments, the neutralized sulfonated block copolymers may serve as an intermediate product which enables the production of articles comprising the sulfonated block copolymers as the ion or water conducting material by way of thermal processes such as molding and melt processing methods.

The method disclosed herein provides immense benefits over the art as it allows processing a functionalized block copolymer into water or ion conductive articles by a procedure which does not require forming solutions or liquid or gelled dispersions, nor liquid casting steps, nor extraction steps.

In another aspect disclosed herein is has been found that modifying the sulfonated block copolymer with certain amines has a surprising impact on the performance of articles comprising these modified block copolymers. For example, in some embodiments, the water uptake of articles comprising the modified block copolymers is significantly lower than the water uptake of articles comprising the corresponding sulfonated block copolymers. The reduced tendency of the articles comprising the modified sulfonated block copolymers to take up water results in a distinctly improved dimensional stability of the articles as compared to articles comprising the sulfonated block copolymer under wet conditions. In some embodiments, articles comprising the modified block copolymers exhibit an exceptionally high level of ion conductivity. In particular embodiments, the ion transport through a membrane comprising the modified block copolymers is high in spite of the low tendency to take up water. In some embodiments, such membranes exhibit high specific conductivity, high selectivity for cation transport, and low swelling on exposure to water.

Accordingly, the modified sulfonated block copolymers described herein are broadly suited for a wide variety of end uses, and are especially useful for applications involving water or which take place in wet environments. In particular applications the modified sulfonated block copolymers described herein are broadly suited for electrically driven water separation processes, or for osmotically driven separation processes such as forward osmosis, filtration, and "blue energy" applications.

Additionally, the modified sulfonated block copolymers according to the present disclosure are melt processible. As such, the modified sulfonated block copolymers can be processed into ion and water transporting articles of various shapes in a single processing step.

In some embodiments, the sulfonated block copolymers which may be neutralized according to embodiments of the present disclosure include the sulfonated block copolymers as described in US 7,737,224 to Willis et al. Furthermore, the precursor sulfonated block copolymers which include the sulfonated block copolymers as described in US 7,737,224 may be prepared according to the process of WO 2008/089332 to Dado et al. or WO 2009/137678 to Handlin et al.

The block copolymers needed to prepare the functionalized block copolymers of the present disclosure may be made by a number of different processes, including anionic polymerization, moderated anionic polymerization, cationic polymerization, Ziegler-Natta polymerization, and living chain or stable free radical polymerization. Anionic polymerization is described below in more detail, and in the patents referenced. Moderated anionic polymerization processes for making styrenic block copolymers are described, for example, in US 6,391,981, US 6,455,651 and US 6,492,469. Cationic polymerization processes for preparing block copolymers are disclosed, for example, in US 6,515,083 and US 4,946,899.

Living Ziegler-Natta polymerization processes that may be used to make block copolymers were recently reviewed by G.W. Coates, P.D. Hustad, and S. Reinartz in Angew. Chem. Int. Ed., 41, 2236-2257 (2002); a subsequent publication by H. Zhang and K. Nomura (J. Am. Chem. Soc. Commun., 2005) describes the use of living Ziegler-Natta techniques for making styrenic block copolymers specifically. The extensive work in the field of nitroxide mediated living radical polymerization chemistry has been reviewed; see C.J. Hawker, A.W. Bosman, and E. Harth, Chem. Rev., 101(12),

3661-3688 (2001). As outlined in this review, styrenic block copolymers were synthesized using living or stable free radical techniques. For the polymers of the present invention, nitroxide mediated polymerization methods will be the preferred living chain or stable free radical polymerization process.

## 1. Polymer Structure

One aspect of the method described herein relates to the polymer structure of the functionalized block copolymers. The functionalized block copolymer has at least two polymer end or outer blocks A and at least one saturated polymer interior block B wherein each A block is a polymer block resistant to sulfonation and each B block is a polymer block susceptible to sulfonation.

Preferred polymer structures have the general configuration A-B-A, $(A-B)_n(A)$, $(A-BA)_n$, $(A-B-A)_nX$, $(A-B)_nX$, A-B-D-B-A, A-D-B-D-A, $(A-D-B)_n(A)$, $(A-B-D)_n(A)$, $(AB-D)_nX$, $(A-D-B)_nX$ or mixtures thereof, where n is an integer from 2 to 30, X is coupling agent residue and A, B and D are as defined herein below. Most preferred structures are linear structures such as A-B-A, $(A-B)_2X$, A-B-D-B-A, $(AB-D)_2X$, A-D-B-D-A, and $(A-D-B)_2X$, and radial structures such as $(A-B)_nX$ and $(A-D-B)_nX$ where n is 3 to 6.

Such block copolymers are typically made via anionic polymerization, stable free radical polymerization, cationic polymerization or Ziegler-Natta polymerization. Preferably, the block copolymers are made via anionic polymerization. It will be understood by those skilled in the art that in any polymerization, the polymer mixture may include a certain amount of A-B diblock copolymer, in addition to any linear and/or radial polymers. The respective amounts have not been found to be detrimental to the practice of the invention.

The A blocks are one or more segments selected from polymerized (i) para-substituted styrene monomers, (ii) ethylene, (iii) alpha olefins of 3 to 18 carbon atoms; (iv) 1,3-cyclodiene monomers, (v) monomers of conjugated dienes having a vinyl content less than 35 mol percent prior to hydrogenation, (vi) acrylic esters, (vii) methacrylic esters, and (viii) mixtures thereof. If the A segments are polymers of 1,3-cyclodiene or conjugated dienes, the segments will be hydrogenated subsequent to polymerization of the block copolymer and before sulfonation of the block copolymer.

The para-substituted styrene monomers are selected from para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene and mixtures of the above monomers. Preferred para-substituted styrene monomers are para-t-butylstyrene and para-methylstyrene, with para-t-butylstyrene being most preferred. Monomers may be mixtures of monomers, depending on the particular source. It is desired that the overall purity of the para-substituted styrene monomers be at least 90%-wt., preferably at least 95%-wt., and even more preferably at least 98%-wt. of the desired para-substituted styrene monomer.

When the A blocks are polymers of ethylene, it may be useful to polymerize ethylene via a Ziegler-Natta process, as taught in the references in the review article by G.W. Coates et. al, as cited above. It is preferred to make the ethylene blocks using anionic polymerization techniques as taught in US 3,450,795. The block molecular weight for such ethylene blocks typically is between 1,000 and 60,000.

When the A blocks are polymers of alpha olefins of 3 to 18 carbon atoms, such polymers are prepared by via a Ziegler-Natta process, as taught in the references in the review article by G.W. Coates et. al, as cited above. Preferably, the alpha olefins are propylene, butylene, hexene or octene, with propylene being most preferred. The block molecular weight for such alpha olefin blocks typically is between 1,000 and 60,000.

When the A blocks are hydrogenated polymers of 1,3-cyclodiene monomers, such monomers are selected from the group consisting of 1,3-cyclohexadiene, 1,3-cycloheptadiene and 1,3-cyclooctadiene. Preferably, the cyclodiene monomer is 1,3-cyclohexadiene. Polymerization of such cyclodiene monomers is disclosed in US 6,699,941. It will be necessary to hydrogenate the A blocks when using cyclodiene monomers since non-hydrogenated polymerized cyclodiene blocks are susceptible to sulfonation. Accordingly, after synthesis of the A block with 1,3-cyclodiene monomers, the block copolymer will be hydrogenated.

When the A blocks are hydrogenated polymers of conjugated acyclic dienes having a vinyl content less than 35 mol percent prior to hydrogenation, it is preferred that the conjugated diene is 1,3-butadiene. It is necessary that the vinyl content of the polymer prior to hydrogenation be less than 35 mol percent, preferably less than 30 mol percent. In certain embodiments, the vinyl content of the polymer prior to hydrogenation will be less than 25 mol percent, even more preferably less than 20 mol percent, and even less than 15 mol percent with one of the more advantageous vinyl contents of the polymer prior to hydrogenation being less than 10 mol percent. In this way, the A blocks will have a crystalline structure, similar to that of polyethylene. Such A block structures are disclosed in US 3,670,054 and in US 4,107,236.

The A blocks may also be polymers of acrylic esters or methacrylic esters. Such polymer blocks may be made according to the methods disclosed in US 6,767,976. Specific examples of the methacrylic ester include esters of a primary alcohol and methacrylic acid, such as methyl methacrylate, ethyl methacrylate, propyl methacrylate, n-butyl methacrylate, isobutyl methacrylate, hexyl methacrylate, 2-ethylhexyl methacrylate, dodecyl methacrylate, lauryl methacrylate, methoxyethyl methacrylate, dimethylaminoethyl methacrylate, diethylaminoethyl methacrylate, glycidyl methacrylate, trimethoxysilylpropyl methacrylate, trifluoromethyl methacrylate, trifluoroethyl methacrylate; esters of a secondary alcohol and methacrylic acid, such as isopropyl methacrylate, cyclohexyl methacrylate and isobornyl methacrylate; and esters of a tertiary alcohol and methacrylic acid, such as tert-butyl methacrylate. Specific examples of the acrylic ester include esters of a primary alcohol and acrylic acid, such as methyl acrylate, ethyl acrylate, propyl acrylate, n-butyl acrylate, isobutyl acrylate, hexyl acrylate, 2-ethylhexyl acrylate, dodecyl acrylate, lauryl acrylate, methoxyethyl acrylate, dimethylaminoethyl acrylate, diethylaminoethyl acrylate, glycidyl acrylate, trimethoxysilylpropyl acrylate, trifluoromethyl acrylate, trifluoroethyl acrylate; esters of a secondary alcohol and acrylic acid, such as isopropyl acrylate, cyclohexyl acrylate and isobornyl acrylate; and esters of a tertiary alcohol and acrylic acid, such as tert-butyl acrylate. If necessary, as raw material or raw materials, one or more of other anionic polymerizable monomers may be used together with the (meth)acrylic ester in the present invention. Examples of the anionic polymerizable monomer that can be optionally used include methacrylic or acrylic monomers such as trimethylsilyl methacrylate, N,N-dimethylmethacrylamide, N,N-diisopropylmethacrylamide, N,N-diethylmethacrylamide, N,Nmethylethylmethacrylamide, N,N-di-tert-butylmethacrylamide, trimethylsilyl acrylate, N,N, dimethylacrylamide N,N-diisopropylacrylamide, N,N-methylethylacrylamide and N,N-di-tert-butylacrylamide. Moreover, there may be used a multifunctional anionic polymerizable monomer having in the molecule thereof two or more methacrylic or acrylic structures, such as methacrylic ester structures or acrylic ester structures (for example, ethylene glycol diacrylate, ethylene glycol dimethacrylate, 1,4-butanediol diacrylate, 1,4-butanediol dimethacrylate, 1,6-hexanediol diacrylate, 1,6-hexanediol dimethacrylate, trimethylolpropane triacrylate and trimethylolpropane trimethacrylate).

In the polymerization processes used to make the acrylic or methacrylic ester polymer blocks, only one of the monomers, for example, the (meth)acrylic ester may be used, or two or more thereof may be used in combination. When two or more of the monomers are used in combination, any copolymerization form selected from random, block, and tapered block copolymerization forms may be effected by selecting conditions such as a combination of the monomers and the timing of adding the monomers to the polymerization system (for example, simultaneous addition of two or more monomers, or separate additions at intervals of a given time).

The A blocks may also contain up to 15 mol percent of the vinyl aromatic monomers mentioned for the B blocks. In some embodiments, the A blocks may contain up to 10 mol percent, preferably they will contain only up to 5 mol percent, and particularly preferably only up to 2 mol percent of the vinyl aromatic monomers mentioned in the B blocks. However, in the most preferred embodiments, the A blocks will contain no vinyl monomers mentioned in the B blocks. Accordingly, the sulfonation level in the A blocks may be from 0 up to 15 mol percent of the total monomers in the A block. It will be understood by those skilled in the art that suitable ranges include any combination of the specified mol percents even if the specific combination and range is not listed herewith.

Each B block comprises segments of one or more polymerized vinyl aromatic monomers selected from unsubstituted styrene monomer, ortho-substituted styrene monomers, meta-substituted styrene monomers, alpha-methylstyrene monomer, 1,1-diphenylethylene monomer, 1,2-diphenylethylene monomer, and mixtures thereof. In addition to the monomers and polymers noted immediately before, the B blocks may also comprise a hydrogenated copolymer of such monomer(s) with a conjugated diene selected from 1,3-butadiene, isoprene and mixtures thereof, having a vinyl content of between 20 and 80 mol percent. These copolymers with hydrogenated dienes may be random copolymers, tapered copolymers, block copolymers or controlled distribution copolymers. In one preferred embodiment, the B blocks comprise a copolymer of conjugated dienes and the vinyl aromatic monomers noted in this paragraph wherein olefinic double bonds are hydrogenated. In another preferred embodiment, the B blocks are unsubstituted styrene monomer blocks which are aromatic by virtue of the nature of the monomer and do not require the added process step of hydrogenation. The B blocks having a controlled distribution structure are disclosed in US 7,169,848. In one preferred embodiment, the B blocks are unsubstituted styrene blocks, since the polymer will not then require a separate hydrogenation step.

In another aspect, the functionalized block copolymer of the present disclosure includes at least one impact modifier block D having a glass transition temperature less than 20°C. In one embodiment, the impact modifier block D comprises a hydrogenated polymer or copolymer of a conjugated diene selected from isoprene, 1,3-butadiene and mixtures thereof having a vinyl content prior to hydrogenation of between 20 and 80 mol percent and a number average molecular weight of between 1,000 and 50,000. In another embodiment, the impact modifier block D comprises an acrylate or silicone polymer having a number average molecular weight of 1,000 to 50,000. In still another embodiment, the D block is a polymer block of isobutylene having a number average molecular weight of 1,000 to 50,000.

Each A block independently has a number average molecular weight between 1,000 and 60,000 and each B block independently has a number average molecular weight between 10,000 and 300,000. Preferably each A block has a number average molecular weight of between 2,000 and 50,000, more preferably between 3,000 and 40,000 and even more preferably between 3,000 and 30,000. Preferably each B block has a number average molecular weight of between 15,000 and 250,000, more preferably between 20,000 and 200,000, and even more preferably between 30,000 and 100,000. It will be understood by those skilled in the art that suitable ranges include any combination of the specified number average molecular weights even if the specific combination and range is not listed herewith. These molecular weights are most accurately determined by light scattering measurements, and are expressed as number average

molecular weight. Preferably, the sulfonated polymers have from 8 mol percent to 80 mol percent, preferably from 10 to 60 mol percent A blocks, more preferably more than 15 mol percent A blocks and even more preferably from 20 to 50 mol percent A blocks.

The relative amount of vinyl aromatic monomers which are unsubstituted styrene monomer, ortho-substituted styrene monomer, meta-substituted styrene monomer, alpha-methylstyrene monomer, 1,1-diphenylethylene monomer, and 1,2-diphenylethylene monomer in the sulfonated block copolymer is from 5 to 90 mol percent, preferably from 5 to 85 mol percent. In alternative embodiments, the amount is from 10 to 80 mol percent, preferably from 10 to 75 mol percent, more preferably from 15 to 75 mol percent, with the most preferred being from 25 to 70 mol percent. It will be understood by those skilled in the art that the ranges include any combination of the specified mol percents even if the specific combination and range is not listed herewith.

As for the B block which are free of olefinic double bonds, in one preferred embodiment the mol percent of vinyl aromatic monomers which are unsubstituted styrene monomer, ortho-substituted styrene monomer, meta-substituted styrene monomer, alpha-methylstyrene monomer, 1,1-diphenylethylene monomer, and 1,2-diphenylethylene monomer in each B block is from 10 to 100 mol percent, preferably from 25 to 100 mol percent, more preferably from 50 to 100 mol percent, even more preferably from 75 to 100 mol percent and most preferably 100 mol percent. It will be understood by those skilled in the art that suitable ranges include any combination of the specified mol percents even if the specific combination and range is not listed herewith.

Typical levels of sulfonation are where each B block contains one or more sulfonic functional groups. Preferred levels of sulfonation are 10 to 100 mol percent based on the mol percent of vinyl aromatic monomers which are unsubstituted styrene monomer, ortho-substituted styrene monomer, meta-substituted styrene monomer, alpha-methylstyrene monomer, 1,1-diphenylethylene monomer, and 1,2-diphenylethylene monomer in each B block, more preferably 20 to 95 mol percent and even more preferably 30 to 90 mol percent. It will be understood by those skilled in the art that suitable ranges of sulfonation include any combination of the specified mol percents even if the specific combination and range is not listed herewith. The level of sulfonation is determined by titration of a dry polymer sample, which has been redissolved in tetrahydrofuran with a standardized solution of NaOH in a mixed alcohol and water solvent.

At typical levels of neutralization, each B block contains at least one amine neutralized sulfonic acid or sulfonate ester group. At preferred levels of neutralization, each B block contains from 10 to 100 mol percent of the amine based on the mol percent of vinyl aromatic monomers which are unsubstituted styrene monomer, ortho-substituted styrene monomer, meta-substituted styrene monomer, alpha-methylstyrene monomer, 1,1-diphenylethylene monomer, and 1,2-diphenylethylene monomer present in each B block, more preferably 15 to 99 mol percent, or 20 to 95, or 25 to 80 mol percent of the amine. It will be understood by those skilled in the art that suitable ranges of neutralization include any combination of the specified mol percents even if the specific combination and range is not listed herewith.

In general, at least 50% of the sulfonic acid and sulfonate ester groups present in the B block are neutralized by the amine. According to some embodiments, 75%, or at least 90%, or at least 95%, or at least 98%, of the sulfonic acid and sulfonate ester groups present in the B block are neutralized by the amine. According to some embodiments, 100% of the sulfonic acid and sulfonate ester groups present in the B block are neutralized by the amine. In various embodiments from 85 to 100% of the sulfonic acid and sulfonate ester groups present in the B block are neutralized by the amine. It will be understood by those skilled in the art that suitable ranges of neutralization include any combination of the specified percents even if the specific combination and range is not listed herewith.

2. Amine Structure

A broad variety of amines may be employed for neutralizing the sulfonic acid and sulfonate ester groups of the sulfonated block copolymer. Generally, the amine may be represented by formula (I)

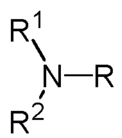

(I)

wherein

- R and $R^1$, each independently, represents hydrogen or a hydrocarbon group, and
- $R^2$ represents a hydrocarbon group, which can be straight chain, branched, or cyclic and can be saturated, partially saturated or aromatic or $R^1$ and $R^2$, together with the nitrogen to which they are bonded form an optionally substituted hetero cycle consisting of carbon and nitrogen.

The choice of the amine will depend primarily on the purpose of the neutralized block copolymer. For example, the choice may be governed by economic considerations, e.g., where the neutralized block copolymer is intended as an intermediate to produce a shaped article comprising a sulfonated block copolymer in accordance with the herein disclosed thermal shaping methods. Accordingly, in some of the embodiments disclosed herein, the nature of the groups R, $R^1$ and $R^2$ in the foregoing formula (I) may vary broadly.

Hydrocarbon groups represented by R, $R^1$ and $R^2$ may be identical or different. Each hydrocarbon group may be straight chain, branched, or cyclic, and may be saturated, partially unsaturated, or aromatic. It will be understood by those having ordinary skill that the hydrocarbon group also may be a combination of one or more of straight chain, branched, and/or cyclic hydrocarbon moieties each of which, in turn, may be saturated, partially unsaturated, or aromatic. Suitable hydrocarbon groups and moieties include

- alkyl, e.g., having from 1 to 12 carbon atoms, such as methyl, ethyl, and straight chain or branched propyl, butyl, pentyl, hexyl, heptyl, octyl, nonyl, decanyl, undecanyl, and dodecanyl;
- alkenyl, e.g., having from 3 to 12 carbon atoms, such as straight chain or branched propenyl, butenyl, pentenyl, hexenyl, heptenyl, octenyl, nonenyl, decenyl, undecenyl, and dodecenyl, as well as corresponding dienes, trienes and other polyenes wherein double bonds may be cumulated, conjugated and/or unconjugated;
- alkynyl, e.g., having from 3 to 12 carbon atoms, such as propynyl, butynyl, and straight chain or branched pentynyl, hexynyl, heptynyl, octynyl, nonynyl, decynyl, undecynyl, and dodecynyl, as well as corresponding groups having one or more additional double and/or triple bonds wherein triple and double bonds may be conjugated or unconjugated and double bonds may be cumulated, conjugated and/or unconjugated;
- cycloalkyl, e.g., having from 3 to 12 carbon atoms, such as cyclopropyl, cyclobutyl, cyclopentyl, cyclohexyl, cycloheptyl, cyclooctyl, cyclononyl, cyclodecanyl, cycloundecanyl, and cyclododecanyl, as well as bi- and polycyclic counterparts thereof;
- cycloalkenyl, e.g., having from 5 to 12 carbon atoms, such as cyclopentenyl, cyclohexenyl, cycloheptenyl, cyclooctenyl, cyclononenyl, cyclodecenyl, cycloundecenyl, and cyclododecenyl, as well as bi- and polycyclic counterparts thereof, and corresponding non-aromatic dienes, trienes and other polyenes, wherein double bonds may be conjugated or unconjugated;
- aryl, e.g., having from 6 to 14 carbon atoms, such as phenyl, indenyl, naphthyl, fluorenyl, anthracenyl, and phenanthrenyl.

The hetero cycle formed by $R_1$, $R_2$ and the nitrogen to which they are bonded generally has 5 or 6 ring members, with at least two of those ring members being carbon. Further ring members which may be present are additional nitrogen ring members. The rings may be saturated, partially saturated, or aromatic, and include in particular

- 5-membered rings consisting of carbon and nitrogen ring members, e.g., pyrrolyl, pyrazolyl, imidazolyl, 1,2,3-triazolyl, 1,2,4-triazolyl and 1,3,4-triazolyl rings as well as the partially or completely hydrogenated counterparts thereof;
- 6-membered rings consisting of carbon and nitrogen ring members, e.g., pyridyl, pyridazinyl, pyrimidyl, pyrazinyl, 1,2,3-triazine, 1,2,4-triazine, 1,3,4-triazine and 1,3,5-triazine rings as well as the partially or completely hydrogenated counterparts thereof;

Optional substituents of the hetero cyclic groups can be straight chain, branched, or cyclic, and can be saturated, partially unsaturated or aromatic. It will be understood by those having ordinary skill in the art that optional substituents, together with the hetero cycle, may form bi- or polycyclic ring systems such as indolyl, isoindolyl, indazolyl, indolizinyl, purinyl, quinolyl, isoquinolyl, quinazolyl, pteridinyl, carbazolyl, and phenazinyl, as well as the partially or completely hydrogenated counterparts thereof.

In a particular embodiment, the sulfonated block copolymer is neutralized by an amine of formula (I)

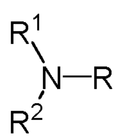

(I)

wherein

R and $R^1$, each independently, represents hydrogen or alkyl, e.g., $C_1$-$C_6$-alkyl such as methyl, ethyl, propyl, 1-methylethyl, 1-butyl, 2-butyl, 1-(2-methyl)propyl, 2-(2-methyl)propyl, 1-pentyl, 2-pentyl, 3-pentyl, 1-(2-methyl)butyl, 1-(3-methyl)butyl, 2-(2-methyl)butyl, 2-(3-methyl)butyl, 1-(2,2-dimethyl)propyl, 1-hextyl, 2-hextyl,

3-hextyl, 1-(2-methyl)pentyl, 1-(3-methyl)pentyl, 1-(4-methyl)pentyl, 2-(2-methyl)pentyl, 2-(3-methyl)pentyl, 2-(4-methyl)pentyl, 3-(2-methyl)pentyl, 1-(2,2-dimethyl)butyl, 1-(2,3-dimethyl)butyl, 1-(3,3-dimethyl)butyl, 2-(2,3-dimethyl)butyl, 1-(2-ethyl)butyl, and 2-(2-ethyl)butyl, and

$R^2$ represents optionally substituted alkyl.

In one aspect of this embodiment, the amine is of the foregoing formula (I) wherein R and $R^1$, each independently, is hydrogen or $C_1$-$C_6$-alkyl, preferably hydrogen or $C_1$-$C_4$-alkyl, in particular hydrogen, methyl or ethyl.

In another aspect of this embodiment, the amine is of the foregoing formula (I) wherein

R and $R^1$, each independently, is hydrogen or $C_1$-$C_6$-alkyl, preferably hydrogen or $C_1$-$C_4$-alkyl; and

$R^2$ is $C_1$-$C_{12}$-alkyl, preferably $C_1$-$C_8$-alkyl.

The amines of this embodiment include, in particular, methylamine, ethylamine, propylamine, 1-methylethylamine, 1-butylamine, 2-butylamine, 1-(2-methyl)propylamine, 2-(2-methyl)propylamine, dimethylamine, N-ethyl-N-methylamine, N-methyl-N-propylamine, N-methyl-N-(1-methylethyl)amine, N-(1-butyl)-N-methylamine, N-(2-butyl)-N-methylamine, N-methyl-N-[1-(2-methyl)propyl]amine, N-methyl-N-[2-(2-methyl)propyl]amine, diethylamine, N-ethyl-N-propylamine, N-ethyl-N-(1-methylethyl)amine, N-(1-butyl)-N-ethylamine, N-(2-butyl)-N-ethylamine, N-ethyl-N-[1-(2-methyl)propyl]amine, N-ethyl-N-[2-(2-methyl)propyl]amine, trimethylamine, N-ethyl-N,N-dimethylamine, N,N-dimethyl-N-propylamine, N,N-dimethyl-N-(1-methylethyl)amine, N-(1-butyl)-N,N-dimethylamine, N-(2-butyl)-N,N-dimethylamine, N,N-dimethyl-N-[1-(2-methyl)propyl]amine, N,N-dimethyl-N-[2-(2-methyl)propyl] amine, triethylamine, N,N-diethyl-N-propylamine, N,N-diethyl-N-(1-methylethyl)amine, N-(1-butyl)-N,N-diethylamine, N-(2-butyl)-N,N-diethylamine, and N,N-diethyl-N-[1-(2-methyl)propyl]amine.

In a further particular embodiment, the amine is of formula (I)

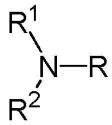

(I)

wherein

R and $R^1$, each independently, represents hydrogen or alkyl, e.g., $C_1$-$C_6$-alkyl such as methyl, ethyl, propyl, 1-methylethyl, 1-butyl, 2-butyl, 1-(2-methyl)propyl, 2-(2-methyl)propyl, 1-pentyl, 2-pentyl, 3-pentyl, 1-(2-methyl)butyl, 1-(3-methyl)butyl, 2-(2-methyl)butyl, 2-(3-methyl)butyl, 1-(2,2-dimethyl)propyl, 1-hexyl, 2-hexyl, 3-hexyl, 1-(2-methyl)pentyl, 1-(3-methyl)pentyl, 1-(4-methyl)pentyl, 2-(2-methyl)pentyl, 2-(3-methyl)pentyl, 2-(4-methyl)pentyl, 3-(2-methyl)pentyl, 1-(2,2-dimethyl)butyl, 1-(2,3-dimethyl)butyl, 1-(3,3-dimethyl)butyl, 2-(2,3-dimethyl)butyl, 1-(2-ethyl)butyl, and 2-(2-ethyl)butyl, and

$R^2$ is a group

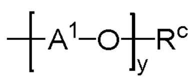

wherein

$A^1$ in each case independently, is a straight chain or branched alkylene moiety,

$R^c$ is optionally substituted alkyl, and

y is a number from 2 to 100.

Such amines are also referred to in the art as polyoxyalkylene amines or "POA".

In one aspect of this embodiment, the amine is of the foregoing formula (I) wherein R and $R^1$, each independently, is hydrogen or $C_1$-$C_6$-alkyl, preferably hydrogen or $C_1$-$C_4$-alkyl, in particular hydrogen, methyl or ethyl.

In another aspect of this embodiment, the amine is of the foregoing formula (I) wherein

R and $R^1$ are hydrogen and

$R^2$ is a group

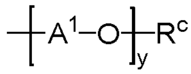

wherein

$A^1$ in each case independently, is straight chain or branched $C_2$-$C_4$-alkylene,
$R^c$ is $C_1$-$C_{18}$-alkyl, phenyl, optionally substituted with one or more identical or different groups selected from halogen, $C_1$-$C_{12}$-alkyl, $C_1$-$C_{12}$-haloalkyl, $C_1$-$C_{12}$-alkoxy or $C_1$-$C_{12}$-haloalkoxy, or amino-$C_2$-$C_4$-alkylene, and
y is a number from 2 to 100.

In a particular aspect of this embodiment, the amine is of the foregoing formula (I) wherein

R and $R^1$ are hydrogen,
$R^c$ is $C_1$-$C_4$-alkyl, in particular methyl,
$A^1$ is in each case independently ethylene or 1,2-propylene, and
y is a number from 5 to 50.

The molar ratio of ethylene to 1,2-propylene moieties A1 may vary broadly. In some embodiments, the polyoxyalkylene monoamine comprises from 0.1 to 10 mol ethylene moieties per mol of 1,2-propylene moieties, or from 0.1 to 6 mol ethylene moieties per mol of 1,2-propylene moieties, in particular from 0.2 to 6 mol ethylene moieties per mol of 1,2-propylene moieties. In further embodiments, the molar amount of ethylene moieties is equal to or greater than the molar amount of 1,2-propylene moieties. In particular embodiments, the molar amount of ethylene moieties is at least twice the molar amount of 1,2-propylene moieties.

Suitable polyoxyalkylene amines of this aspect which are commercially available include, e.g.,

- JEFFAMINE® M-600 having a molecular weight of about 600 and molar ratio of ethylene to 1,2-propylene moieties of 1 : 9;
- JEFFAMINE® M-1000 having a molecular weight of about 1000 and molar ratio of ethylene to 1,2-propylene moieties of 19 : 3;
- JEFFAMINE® M-2005 having a molecular weight of about 2000 and molar ratio of ethylene to 1,2-propylene moieties of 6 : 29; and
- JEFFAMINE® M-2070 having a molecular weight of about 2000 and molar ratio of ethylene to 1,2-propylene moieties of 31 : 10.

JEFFAMINE® M-600 and JEFFAMINE® M-2005 amines are predominately polypropylene glycol (PPG) based, whereas JEFFAMINE® M-1000 and JEFFAMINE® M-2070 amines are predominately polyethylene glycol (PEG) based and are therefore more hydrophilic.

The polyoxyalkylene amines of this embodiment include, in particular, the polyoxyalkylene amines which are mentioned in general and in particular in US application number 13/280,823 (attorney docket number: H0010) having a first filing date on the same day as this disclosure.

In a further embodiment, the sulfonated block copolymer is modified by an amine of formula (Ia)

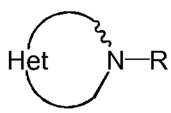

(Ia)

wherein

represents a single or double bond,
R is absent when represents a double bond, or is hydrogen or a hydrocarbon group when represents a single bond, and
Het together with the nitrogen to which it is bonded represents an optionally substituted hetero cycle consisting of carbon and nitrogen ring members. In one aspect of this embodiment, the amine is of the foregoing formula (Ia) wherein

represents a single or double bond,
R if present, is hydrogen or is alkyl, e.g., $C_1$-$C_6$-alkyl such as methyl, ethyl, propyl, 1-methylethyl, 1-butyl, 2-butyl,

1-(2-methyl)propyl, 2-(2-methyl)propyl, 1-pentyl, 2-pentyl, 3-pentyl, 1-(2-methyl)butyl, 1-(3-methyl)butyl, 2-(2-methyl)butyl, 2-(3-methyl)butyl, 1-(2,2-dimethyl)propyl, 1-hexyl, 2-hexyl, 3-hexyl, 1-(2-methyl)pentyl, 1-(3-methyl)pentyl, 1-(4-methyl)pentyl, 2-(2-methyl)pentyl, 2-(3-methyl)pentyl, 2-(4-methyl)pentyl, 3-(2-methyl)pentyl, 1-(2,2-dimethyl)butyl, 1-(2,3-dimethyl)butyl, 1-(3,3-dimethyl)butyl, 2-(2,3-dimethyl)butyl, 1-(2-ethyl)butyl, and 2-(2-ethyl)butyl, and
Het together with the nitrogen to which it is bonded represents an optionally substituted 5-or 6-membered hetero cycle having, in addition to the nitrogen ring member, 4 or 5 ring members selected from the group consisting of at least 2 and at most 5 carbon ring members, and 0 to 3 nitrogen ring members. In another aspect of this embodiment, the amine is of the foregoing formula (Ia)wherein

∿∿∿ represents a single bond,
R where present, is hydrogen or is alkyl as mentioned in general and in particular above, and
Het together with the nitrogen to which it is bonded represents an optionally substituted 5-membered saturated, partially unsaturated or aromatic hetero cycle having, in addition to the nitrogen ring member, 4 ring members selected from the group consisting of at least 2 and at most 4 carbon ring members, and 0 to 2 additional nitrogen ring members.

In another aspect of this embodiment, the amine is of the foregoing formula (Ia) wherein
∿∿∿ represents a single or a double bond,
R where present, is hydrogen or is alkyl as mentioned in general and in particular above, and
Het together with the nitrogen to which it is bonded represents an optionally substituted 5-or 6-membered saturated, partially unsaturated or aromatic hetero cycle having, in addition to the nitrogen ring member, 4 or 5 ring members selected from the group consisting of at least 2 and at most 5 carbon ring members, 0 to 3 additional nitrogen ring members. In another aspect of this embodiment, the amine is of the foregoing formula (Ia)wherein
∿∿∿ represents a single or a double bond,
R where present, is hydrogen or is alkyl as mentioned in general and in particular above, and
Het together with the nitrogen to which it is bonded represents an optionally substituted 5-or 6-membered hetero cycle selected from the group consisting of 5-membered rings consisting of carbon and nitrogen ring members, and 6-membered rings consisting of carbon and nitrogen ring members. In a further aspect of this embodiment, the amine is of the foregoing formula (Ia)wherein
∿∿∿ represents a single or a double bond,
R where present, is hydrogen or is $C_1$-$C_4$-alkyl as mentioned in general and in particular above, and
Het together with the nitrogen to which it is bonded represents an optionally substituted 5-or 6-membered hetero cycle selected from the group consisting of pyrrolyl, pyrazolyl, imidazolyl, 1,2,3-triazolyl, 1,2,4-triazolyl, 1,3,4-triazolyl, pyridinyl, pyridazinyl, pyrimidinyl, pyrazinyl, 1,2,3-triazinyl, 1,2,4-triazinyl, 1,3,5-triazinyl, and partially and fully hydrogenated counterparts thereof. In yet another aspect of this embodiment, the amine is of the foregoing formula (Ia)wherein
∿∿∿ represents a single or a double bond,
R where present, is hydrogen or is $C_1$-$C_4$-alkyl as mentioned in general and in particular above, and
Het together with the nitrogen to which it is bonded represents an optionally substituted 5-or 6-membered hetero cycle selected from the group consisting of pyrrolidinyl, pyrazolidinyl, imidazolidinyl, piperazinyl, pyrrolyl, pyrazolyl, imidazolyl, pyridinyl, pyridazinyl, pyrimidinyl, and pyrazinyl.

## 3. Process to Neutralize the Sulfonated Block Copolymer

According to multiple embodiments disclosed herein, the neutralized sulfonated block copolymers are prepared using a solution or micellar solution of the sulfonated block copolymer as obtained, e.g., in the processes described in WO 2008/089332 or WO 2009/13768.

In general, the sulfonated block copolymer is employed in form of an optionally micellar solution in an organic solvent. The organic solvent is preferably a non-halogenated aliphatic solvent and contains a first non-halogenated aliphatic solvent which serves to solvate one or more of the sulfonation resistant blocks or non-sulfonated blocks of the precursor block copolymer. The first non-halogenated aliphatic solvent may include substituted or unsubstituted cyclic aliphatic hydrocarbons having from 5 to 10 carbons. Nonlimiting examples include cyclohexane, methylcyclohexane, cyclopentane, cycloheptane, cyclooctane and mixtures thereof. The most preferable solvents are cyclohexane, cyclopentane and methylcyclohexane. The first solvent may also be the same solvent used as the polymerization vehicle for sulfonation of the non-functionalized block copolymer.

The concentration of the sulfonated block copolymer depends upon the composition of the sulfonated block copolymer, since the limiting concentration below which polymer gelling is non-disabling or negligible depends upon the polymer composition. The limiting concentration may also depend on other factors such as the identity of the solvent or the solvent mixture used and the degree of sulfonation of the sulfonated block copolymer. Generally, the concentration is within the range of from 1 %-wt. to 30%-wt. alternatively from 1%-wt. to 20%-wt., alternatively from 1%-wt. to 15%-wt., alternatively from 1%-wt. to 12%-wt., or alternatively from 1%-wt. to 10%-wt., based on the total weight of a reaction

mixture that is preferably substantially free of halogenated solvents. It will be understood by those skilled in the art that suitable ranges include any combination of the specified weight percents even if the specific combination and range is not listed herewith.

In accordance with some embodiments of the presently described technology, the initial concentration of the sulfonated block copolymer or mixture of sulfonated block copolymers should be maintained below the limiting concentration of the sulfonated block copolymer(s), alternatively in the range of from 0.1%-wt. to a concentration that is below the limiting concentration of the sulfonated block copolymer(s), alternatively from 0.5%-wt. to a concentration that is below the limiting concentration of the sulfonated block copolymer(s), alternatively from 1.0%-wt. to a concentration that is 0.1%-wt. below the limiting concentration of the sulfonated block copolymer(s), alternatively from 2.0%-wt. to a concentration that is 0.1%-wt. below the limiting concentration of the sulfonated block copolymer(s), alternatively from 3.0%-wt. to a concentration that is 0.1%-wt. below the limiting concentration of the sulfonated block copolymer(s), alternatively from 5.0%-wt. to a concentration that is 0.1%-wt. below the limiting concentration of the sulfonated block copolymer(s), based on the total weight of the reaction mixture. It will be understood by those skilled in the art that suitable ranges include any combination of the specified weight percents even if the specific combination and range is not listed herewith.

The neutralized sulfonated block copolymers in which the B block comprises a functional group of formula (II) or (IIa) are conveniently obtained by reacting a solution or micellar solution of the sulfonated block copolymer with the amine (I) or (Ia) as schematically illustrated in the following reaction schemes:

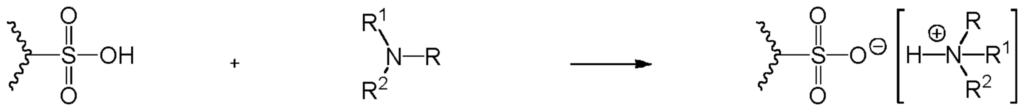

(I) (II)

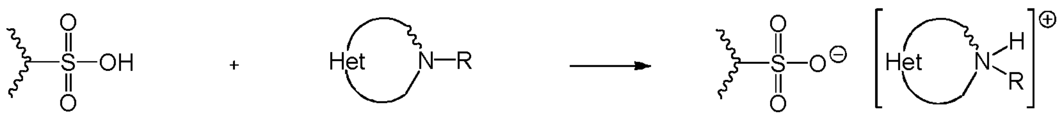

(Ia) (IIa)

wherein R, $R^1$, $R^2$,  and Het are as specified in general and in particular in the foregoing, and 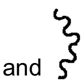 as linked to the $-SO_3H$ or $-SO_3^-$ group represents the remainder of the functionalized block copolymer. For convenience, the amines of formulae (I) and (Ia) and the functional groups of formulae (II) and (IIa) in the following are also collectively referred to as the amine(s) (I) and the functional group(s) (II), respectively.

The amount of the amine (I) which is employed depends upon the moles of sulfonic acid or sulfonate ester groups present in the sulfonated block copolymer and on the desired level of neutralization. When the amount of the amine (I) is less than about 80% of the stoichiometric amount with respect to the sulfonic acid or sulfonate ester groups present in the sulfonated block copolymer, the amine (I) will normally react quantitatively. For levels of neutralization above about 80%, it has been found to be advantageous to employ the amine (I) in excess. Normally, the amine (I) may be employed in amounts ranging from 50% to 2000% of the stoichiometric amount with respect to the sulfonic acid or sulfonate ester functionalities of the sulfonated block copolymer.

In some embodiments the amine (I) may be added in at least 100%, particularly at least 105%, more particularly at least 110%, or at least 120% of the stoichiometric amount with respect to the sulfonic acid or sulfonate ester groups present in the sulfonated block copolymer. Further, the amine (I) may be added in at most 200%, particularly at most 175%, more particularly at most 150%, or at most 125%, of the stoichiometric amount with respect to the sulfonic acid or sulfonate ester groups present in the sulfonated block copolymer. It will be understood by those skilled in the art that suitable ranges include any combination of the specified stoichiometric amounts even if the specific combination and range is not listed herewith.

In some embodiments, the amine (I) is generally used in an amount of from 1.0 to 2.0 equivalents of the amine (I) per 1 equivalent of sulfonic acid or sulfonate ester group. In other embodiments there may be added 1.0 equivalent to 1.85 equivalents of the amine (I) per 1 equivalent of sulfonic acid or sulfonate ester group. In further embodiments, there may be added 1.0 equivalent to 1.75 equivalents of the amine (I) per 1 equivalent of sulfonic acid or sulfonate ester group. In still further embodiments, there may be added 1.0 equivalents to 1.5 equivalents of the amine (I) per 1 equivalent of sulfonic acid or sulfonate ester group. In additional embodiments, there may be added 1.0 equivalent to

1.3 equivalents of the amine (I) per 1 equivalent of sulfonic acid or sulfonate ester group. It will be understood by those skilled in the art that suitable ranges include any combination of the specified equivalents even if the specific combination and range is not listed herewith.

The level of neutralization may be adjusted within broad ranges, e.g., from 80% to 100% of the sulfonic acid or sulfonate ester groups being neutralized by one equivalent of the amine (I) per equivalent of sulfonic acid functionality in the block copolymer. In other embodiments the level of neutralization is at least 90%, particularly at least 95%, more particularly at least 95% of the sulfonic acid or sulfonate ester groups being neutralized by one equivalent of the amine (I) per equivalent of sulfonic acid functionality in the block copolymer. In some embodiments, at most 95%, preferably at most 99%, more particularly 100%, of the sulfonic acid or sulfonate ester groups are neutralized by one equivalent of the amine (I) per equivalent of sulfonic acid functionality in the block copolymer.

In some of the embodiments, the level of neutralization may be higher where the sulfonated block copolymer has a lower degree of sulfonation, e.g., where the degree of sulfonation of the sulfonated block copolymer is in a range of from 10 to 70 mol%, the level of neutralization may be in a range of from 95 to 100%. In other embodiments, the level of neutralization may be lower where the sulfonated block copolymer has a higher degree of sulfonation, e.g., where the degree of sulfonation of the sulfonated block copolymer is in a range of 85 to 100 mol%, the level of neutralization may be in a range of from 90 to 100 mol%.

The neutralization reaction may normally be conducted at a temperature in the range of from room temperature (about 20°C) to the boiling point of the solvent or solvent mixture. The reaction may be exothermic, i.e., may increase the temperature of the reaction medium by 10 to 20°C, depending on the nature of the amine (I), the amount per time in which the amine (I) is added, and on the degree to which the block copolymer is sulfonated. In some of the embodiments, the reaction temperature may be in the range of from 20°C to 100°C, or from 20°C to 60°C.

The expression "reaction time" in this context is understood to be the interval of time starting when all of the reactants have been combined and ending when the neutralization reaction has reached completion. Generally, the reaction time may range from approximately less than 1 minute to approximately 24 hours or longer. Preferably, completion of the reaction is reached within 1 hour, or within 30 minutes.

The neutralized sulfonated block copolymer may be separated from the reaction mixture by evaporating the reaction solvent(s) optionally at a reduced pressure and optionally at an elevated temperature. In some embodiments, the reaction mixture comprising the neutralized sulfonated block copolymers may be used without further processing.

## 4. Shaped Articles of the Neutralized Block Copolymers

The neutralized block copolymers of the present disclosure can be processed to obtain articles of various shapes and forms, e.g., sheets and fibers, as well as hollow bodies such as tubes.

According to several embodiments disclosed herein it has been found that the neutralized block copolymers generally have a melt flow index (MFI) of at least 0.5 g/10 min (230°C, 5 kg) according to ASTM 1238, preferably at least 1.0 g/10 min (230°C, 5 kg), and can be shaped into articles by thermal methods such as molding and melt processing methods.

In particular embodiments, the MFI of the neutralized block copolymers is at least 1.25 g/10 min, or is at least 1.5 g/10 min. In other particular embodiments, the MFI of the neutralized block copolymers is at least 2.0 g/10 min, or is at least 2.5 g/10 min, or is at least 5.0 g/10 min. In some of the embodiments, the MFI of the neutralized block copolymers is of from 0.5 to 25 g/10 min, or from 1.0 to 25 g/10 min, or from 1.5 to 25 g/10 min. In other embodiments, the MFI of the neutralized block copolymers is of from 0.5 to 20 g/10 min, or from 1.0 to 20 g/10 min, or from 1.5 to 20 g/10 min. In further embodiments, the MFI of the neutralized block copolymers is of from 0.5 to 15 g/10 min, or from 1.0 to 15 g/10 min, or from 1.5 to 15 g/10 min.

### a) Articles via Thermal Processing Methods

The neutralized block copolymers of the present disclosure generally have a melt flow index which renders them suitable as materials which can be shaped at elevated temperature, i.e., by thermal methods such as molding and melt processing, e.g., melt spinning, melt pressing, and extrusion procedures.

In general, the neutralized block copolymers are formed into a shaped article by these thermal methods by

i) providing a composition comprising the neutralized sulfonated block copolymer,
ii) heating the composition to a temperature at which the neutralized sulfonated block copolymer softens and is moldable,
iii) shaping the composition obtained in (ii), and
iv) cooling the shaped composition obtained in (iii) to obtain the shaped article.

The composition which is employed for shaping the articles in accordance with the present disclosure by thermal methods comprises the neutralized sulfonated block copolymer as the essential component, i.e., in amounts sufficient to obtain an article comprising at least 50%-wt. of the neutralized sulfonated block copolymer(s). According to several embodiments, the composition comprises at least 70%-wt., or at least 80%-wt., or at least 90%-wt., or at least 95%-wt., of the neutralized sulfonated block copolymer. According to other embodiments, the composition consists essentially of one or more neutralized block copolymer(s), i.e., at least 95%-wt., or at least 98%-wt., of the composition consists of the neutralized block copolymer(s) and optionally one or more additives. In certain embodiments the composition consists of one or more neutralized block copolymer(s).

In addition to the neutralized block copolymer(s), the composition may comprise additives such as pigments, antioxidants, stabilizers, surfactants, waxes and flow promoters, e.g., in amounts up to and including 10%-wt., i.e., from 0 to 10%-wt., based on the total weight of the composition. When any one or more of these components are present, each may be present in an amount of up to 10%-wt., preferably from 0.001 to 5%-wt., and more preferably from 0.001 to 2%-wt.

Moreover, the compositions comprising the neutralized block copolymers may comprise fillers, e.g., in amounts up to and including 25%-wt., i.e., from 0 to 25%-wt., based on the total weight of the composition. When the composition comprises one or more fillers, the total amount of the filler(s) preferably ranges from 2.5 to 20%-wt., and more preferably from 5 to 20%-wt.

Further, the compositions comprising the neutralized block copolymers may comprise a variety of other polymers as more specifically addressed below, e.g., in a total amount up to and including 25%-wt., i.e., from 0 to 25%-wt., based on the total weight of the composition. When the composition comprises one or more polymer(s) other than the neutralized block copolymer, the total amount of the other polymer(s) preferably ranges from 2.5 to 20%-wt., and more preferably from 5 to 15%-wt.

In some particular embodiments the composition comprises:

1) from 50 to 100%-wt., or from 75 to 100%-wt., or from 90 to 100%-wt., of one or more neutralized sulfonated block copolymers;
2) from 0 to 10%-wt., or from 0.001 to 5%-wt., or from 0.005 to 1%-wt., of one or more additives;
3) from 0 to 25%-wt., or from 1 to 25%-wt., or from 2.5 to 20%-wt., of one or more fillers; and
4) from 0 to 25%-wt., or from 2 to 25%-wt., or from 5 to 20%-wt., of one or more polymers different from the neutralized sulfonated block copolymers in (1);

with the weight percentages in each case being based on the total weight of the components (1) to (4).

In other particular embodiments the composition comprises:

1) from 50 to 95%-wt., or from 60 to 90%-wt., or from 70 to 85%-wt., of one or more neutralized sulfonated block copolymers;
2) from 0 to 7.5%-wt., or from 0.001 to 5%-wt., or from 0.005 to 2.5%-wt., of one or more additives;
3) from 0 to 25%-wt., or from 0 to 20%-wt., or from 0 to 15%-wt., of one or more fillers; and
4) from 1 to 25%-wt., or from 2 to 20%-wt., or from 5 to 15%-wt., of one or more polymers different from the neutralized sulfonated block copolymers in (1);

with the weight percentages in each case being based on the total weight of the components (1) to (4).

In yet further particular embodiments the composition comprises:

1) from 50 to 95%-wt., or from 60 to 90%-wt., or from 70 to 85%-wt., of one or more neutralized sulfonated block copolymers;
2) from 0 to 7.5%-wt., or from 0.001 to 5%-wt., or from 0.005 to 1%-wt., of one or more additives;
3) from 1 to 25%-wt., or from 2.5 to 20%-wt., or from 5 to 15%-wt., of one or more fillers; and
4) from 0 to 25%-wt., or from 0 to 20%-wt., or from 2 to 15%-wt., of one or more polymers different from the neutralized sulfonated block copolymers in (1);

with the weight percentages in each case being based on the total weight of the components (1) to (4).

The composition comprising one or more of the neutralized block copolymer(s) and at least one of the above-mentioned further constituents are provided by mixing the neutralized block copolymer(s) and the additional constituent(s) to obtain a homogeneous blend. Mixing can be accomplished by any convenient means known in the art. Depending upon the melting or softening point of the neutralized block copolymer(s) and the additional constituent(s) employed, heating may be necessary to provide sufficient mixing to achieve the desired homogeneity. Under those circumstances, steps (i) and (ii) of the method are conveniently conducted together. Mixing may be performed in batches or continuously.

Examples of suitable mixing apparatus are screw extruders, roll mills, and high intensity batch mixers such as Brabenders.

According to various embodiments, the constituents of the composition are fed continuously to an extruder pre-heated to a temperature in the range of 50 to 300°C, preferably 100 to 250°C, wherein the constituents are mixed to form a moldable, homogeneous blend, and the blend is then extruded through a suitable die.

It will be understood by those skilled in the art that the constituents may be fed to the extruder in a single stage or in multiple stages according to methods known in the art depending upon the particular constituents employed and the rheological requirements to attain good mixing.

Shaped articles can be formed from the moldable, i.e., plastically formable, composition by any means known in the art. In a preferred embodiment the moldable composition is extruded through a flat or circular film or sheet die. In the alternative, the moldable composition may be compression molded into a film or sheet. The film or sheet so formed can be further formed into articles of more complex shape by thermoforming. In another embodiment, the shaped articles can be formed by injection molding.

After thermo-forming, the shaped article is generally cooled to ambient temperature, i.e., about 20°C. Cooling may be accomplished by any method known to those skilled in the art. Normally, the shaped article will be cooled gradually, i.e., by exposing it to an environment which is kept at an ambient temperature for a prolonged period.

In accordance with some embodiments, the cooling rate of the shaped article is controlled to allow the polymer chains to align to reduce molding stress in the thermoformed article.

In accordance with other embodiments, the thermoformed article is annealed prior to, during or after cooling to reduce stress and to obtain the desired microstructure. Generally, the annealing process includes heating the shaped article to a temperature just below its softening point, keeping it at the high temperature for a period of time, and then cooling it very slowly until it returns to room temperature. Those having ordinary skill in the art will appreciate that the times for heating the article, as well as the cooling rate, will depend upon the thickness of the material as well as the material itself, and that optimum conditions may be determined by routine experiments using sample sheets or films.

b) Optional After-Treatment

In accordance with several embodiments disclosed herein, the shaped articles comprising the neutralized block copolymer which are obtained in the manner described above may be treated to convert the functional group(s) (II) of the neutralized block copolymer into -$SO_3H$ group(s) to obtain a shaped article comprising the sulfonated block copolymer(s) employed in the preparation of the neutralized block copolymer. Advantageously, the shaped article subjected to such an after-treatment is obtained by a process comprising at least one molding or melt-processing step.

Conversion of the functional group(s) (II) of the neutralized block copolymer into - $SO_3H$ group(s) is generally achieved by treating the shaped article with an effective amount of a proton acid. The nature of the acid employed for regenerating the sulfonated block copolymer in the shaped article generally is not critical, and any inorganic or organic proton donating acid may be used. The selection of the acid, therefore, is normally governed by economic and ecological considerations.

In preferred embodiments, therefore, the acid is selected from inorganic acids such as, e.g., hydrochloric acid, sulfuric acid, phosphoric acid, nitric acid, and boric acid.

Conveniently, the acid is employed as an aqueous solution having a pH of at most 4. More preferably, the pH is at most 2, or is at most 1.

The aqueous solution of the acid which is employed for regenerating the sulfonated block copolymer in the shaped article further may comprise a polar, aprotic or protic organic solvent so long as the resulting composition does not soften the shaped article to an extent which adversely affects the shape of the article.

Suitable polar, aprotic or protic organic solvents include alcohols having from 1 to 20 carbon atoms, preferably from 1 to 8 carbon atoms, more preferably from 1 to 4 carbon atoms; ethers having from 1 to 20 carbon atoms, preferably from 1 to 8 carbon atoms, more preferably from 1 to 4 carbon atoms, including cyclic ethers; esters of carboxylic acids, esters of sulfuric acid, amides, carboxylic acids, anhydrides, sulfoxides, nitriles, and ketones having from 1 to 20 carbon atoms, preferably from 1 to 8 carbon atoms, more preferably from 1 to 4 carbon atoms, including cyclic ketones. More specifically, the polar, aprotic or protic organic solvent(s) may be selected from methanol, ethanol, propanol, isopropanol, dimethyl ether, diethyl ether, dipropyl ether, dibutyl ether, substituted and unsubstituted furans, oxetane, dimethyl ketone, diethyl ketone, methyl ethyl ketone, substituted and unsubstituted tetrahydrofuran, methyl acetate, ethyl acetate, propyl acetate, dimethylsulfate, carbon disulfide, acetone, cresol, creosol, dimethylsulfoxide (DMSO), cyclohexanone, dimethyl acetamide, dimethyl formamide, acetonitrile, and dioxane, with tetrahydrofuran, methanol, ethanol, isopropyl alcohol, methylsulfate, and dimethylsulfate, being preferred.

In alternative embodiments, the sulfonated block copolymer may be restituted by treating the shaped article comprising the neutralized block copolymer with an non-aqueous acid, e.g., with an inorganic or organic acid or anhydride, e.g., hydrochloric acid, formic acid, acetic acid, acetic anhydride, sulfoacetic acid, and methylsulfate, optionally in mixture with one or more of the aforementioned polar, aprotic or protic organic solvents.

Restitution of the sulfonated block copolymer in the shaped article is generally achieved by soaking the article at least once in the acidic medium under conditions sufficient to replace the ammonium ions $[NHRR_1R_2]$+ by protons, and subsequently washing the soaked article with water or an aqueous organic solvent.

The restitution reaction may normally be conducted at a temperature in the range of from room temperature (about 20°C) to the boiling point of the solvent or solvent mixture. The reaction may be exothermic, i.e., may increase the temperature of the reaction medium by 10 to 20°C, depending on the nature of the acidic medium, the amount per time in which the acidic medium is added, and on the degree to which the block copolymer is functionalized. In some of the embodiments, the reaction temperature may be in the range of from 20°C to 100°C, or from 20°C to 60°C.

Restitution of the $-SO_3H$ groups in the functionalized block copolymer comprised in the shaped article may be partial or complete. According to several embodiments disclosed herein, at least 85%, or at least 95% or at least 98% of the functional groups (II) are converted into $-SO_3H$ groups. In further embodiments, essentially all of the functional groups (II), i.e., at least 99% thereof, preferably at least 99.5 or 100% thereof, are converted into - $SO_3H$ groups.

After the acid treatment(s), the shaped article is washed and optionally dried. Conveniently, the shaped article may be washed at least once with water or with an aqueous organic solvent. Organic solvents suitable for washing the shaped article comprising the restituted sulfonated block copolymer generally include the polar, protic or aprotic solvents mentioned in general and in particular in the foregoing.

Generally, the shaped article is washed until the washing liquid has a pH of 5 to 7, preferably 5.5 to 7, or 6 to 7. Those having ordinary skill will appreciate that the removal of extraneous ions from the acid treated shaped article may also be monitored, and the completeness of the removal ensured, by monitoring, e.g., the conductivity of the spent washing liquid relative to the conductivity of the unused washing liquid.

The washing may normally be conducted at a temperature in the range of from room temperature (about 20°C) to the boiling point of the washing liquid. In some of the embodiments, the washing temperature may be in the range of from 20°C to 100°C, or from 20°C to 60°C.

Those having ordinary skill in the art will appreciate that the structural integrity of the shaped article during the acid treatment(s) and washing procedure(s) may be ensured by supporting the shape using external reinforcing means such as frames, braces, mountings, and underpinnings.

## 5. Properties of the Modified Block Copolymers

According to several embodiments, the modified sulfonated block copolymers disclosed herein is has been found that modifying the sulfonated block copolymer has a surprising impact on the performance of membranes comprising these block copolymers. For example, in some embodiments, the water uptake of membranes comprising the modified block copolymers is significantly lower than the water uptake of membranes comprising the corresponding sulfonated block copolymers. The reduced tendency of the membranes comprising the modified sulfonated block copolymers to take up water results in a distinctly improved dimensional stability of the membranes upon immersion in water as compared to membranes comprising the sulfonated block copolymer. In some embodiments, membranes comprising the modified block copolymers exhibit an exceptionally high level of ion conductivity. In particular embodiments, the ion transport through the membrane is high in spite of the low tendency to take up water. In some embodiments, the membranes exhibit high specific conductivity, high selectivity for cation transport, and low swelling on exposure to water.

It has been found that modifying the sulfonated block copolymers improves the tensile modulus of the sulfonated block copolymers as compares to the corresponding sulfonated block copolymers. In other words, the modified block copolymer exhibits a lower tensile modulus in the dry state than a corresponding sulfonated block copolymer. As a result, when immersed in water, the modified block copolymer exhibits a wet tensile modulus which is essentially the same or only slightly lower than the modulus in the dry state. Therefore, according to some embodiments, in both wet and dry states, the modified block copolymer will have the same or a similar modulus. The modified block copolymers, thus, retain their softness and drape performance independent of the humidity of the environment. It has also surprisingly been found that in addition to these properties, the modified block copolymers also exhibit high water vapor transport rates and very good dimensional stability.

Accordingly, in some embodiments, the dry tensile modulus of the modified block copolymer is equal to or less than that of the corresponding sulfonated block copolymer. In other embodiments the dry tensile modulus of the modified block copolymer is decreased to the range of from 10% to 99% of the tensile modulus of the corresponding sulfonated block copolymer. In other embodiments, the dry tensile modulus of the modified block copolymer is decreased to the range of from 50% to 95% of the tensile modulus of the corresponding sulfonated block copolymer. In further embodiments, the dry tensile modulus of the modified block copolymer is decreased to the range of from 60% to 90% of the tensile modulus of the corresponding sulfonated block copolymer. In still further embodiments, the dry tensile modulus of the modified block copolymer is decreased to the range of from 65% to 80% of the tensile modulus of the corresponding sulfonated block copolymer. In even further embodiments, the dry tensile modulus of the modified block copolymer is

decreased to the range of from 70% to 75% of the tensile modulus of the corresponding sulfonated block copolymer. It will be understood by those skilled in the art that suitable ranges include any combination of the specified percentages even if the specific combination and range is not listed herewith.

Furthermore, the tensile modulus of the modified block copolymer may be the same or similar in both the wet and dry states. Accordingly, in some embodiments, the modified block copolymer disclosed herein has a wet tensile modulus that is not less than 20% of the dry tensile modulus. In other embodiments, the wet tensile modulus of the modified block copolymer is not less than 35% of the dry tensile modulus. In additional embodiments, the wet tensile modulus of the modified block copolymer is not less than 50% of the dry tensile modulus. In other embodiments, the wet tensile modulus of the modified block copolymer is not less than 65% of the dry tensile modulus. In further embodiments, the wet tensile modulus is not less than 75% of the dry tensile modulus. In still further embodiments, the wet tensile modulus of the modified block copolymer is not less than 85% of the dry tensile modulus. In other embodiments, the wet tensile modulus of the modified block copolymer is not less than 90% of the dry tensile modulus. In other embodiments, the wet tensile modulus of the modified block copolymer is not less than 95% of the dry tensile modulus. It will be understood by those skilled in the art that suitable ranges include any combination of the specified percentages even if the specific combination and range is not listed herewith.

Furthermore, in some embodiments, the wet tensile strength at break of the modified block copolymer is at least 50% of the dry tensile strength at break. In other embodiments, the wet tensile strength at break of the modified block copolymer is at least 75% of the dry tensile strength at break. In further embodiments, the wet tensile strength at break of the modified block copolymer is at least 90% of the dry tensile strength at break. In further embodiments, the wet tensile strength at break of the modified block copolymer is at about the same as the dry tensile strength at break. It will be understood by those skilled in the art that suitable ranges include any combination of the specified percentages even if the specific combination and range is not listed herewith.

It has also been found that the modified block copolymers disclosed herein have surprisingly high water vapor transport rates while at the same time having very good dimensional stability. It was surprisingly found that the water vapor transport rate (WVTR) of the modified block copolymers may be the same or similar to the WVTR of a corresponding sulfonated block copolymer, and in some embodiments may have a higher WVTR. Accordingly, in some embodiments the WVTR of the modified block copolymer is at least 50% of the WVTR of a corresponding sulfonated block copolymer. In other embodiments, the WVTR is at least 65% of the WVTR of a corresponding sulfonated block copolymer. In further embodiments, the WVTR is at least 75% of the WVTR of a corresponding sulfonated block copolymer. In still further embodiments, the WVTR is at least 85% of the WVTR of a corresponding sulfonated block copolymer. In even further embodiments, the WVTR is at least 90% of the WVTR of a corresponding sulfonated block copolymer. In additional embodiments, the WVTR is at least 95% of the WVTR of a corresponding sulfonated block copolymer. In further embodiments, the WVTR is at least 99% of the WVTR of a corresponding sulfonated block copolymer. It will be understood by those skilled in the art that suitable ranges include any combination of the specified percentages even if the specific combination and range is not listed herewith.

In some embodiments, the WVTR may also be quantified using the inverted cup method in terms of $g/m^2day$ which is the amount of water in grams which is transported through the membrane into a 50% relative humidity atmosphere at 25°C using a membrane having 1 $m^2$ of exposed area and 1 mil of thickness in a day of exposure. Accordingly, in some embodiments the modified block copolymer has a WVTR of at least 1000 g/m2/day. In other embodiments, the WVTR is at least 2500 $g/m^2day$. In further embodiments, the WVTR is at least 10,000 g/m2day. In even further embodiments, the WVTR is at least 15,000 g/m2day. In still further embodiments, the WVTR is at least 20,000 $g/m^2day$. It will be understood by those skilled in the art that suitable ranges include any combination of the specified rates even if the specific combination and range is not listed herewith.

It has been surprisingly found that the modified block copolymers exhibit a high WVTR while also maintaining very good dimensional stability. Dimensional stability can refer to the overall physical shape of a membrane or article comprising the modified block copolymer. Thus, polymers with good dimensional stability are more likely to maintain their form, and are less likely to sag or change shape in the presence of water. While there are a number of ways to measure the dimensional stability of a block copolymer, including measuring the length, width, and thickness of a membrane in both wet and dry states, one method includes measuring the water uptake of the block copolymer membrane.

Accordingly, the expression "water uptake value" as used herein refers to the weight of water which is absorbed by a block copolymer in equilibrium as compared to the original weight of the dry block copolymer, and is calculated as a percentage. A lower water uptake value indicates that less water has been absorbed and therefore corresponds to a better dimensional stability.

The surprising and advantageous dimensional stability is desirable in water management membranes, i.e., in applications where a membrane is constrained in a mounting device and small changes in the dimensions of the membrane may cause buckling and tearing, thereby inevitably causing the performance of the device to degrade or even fail. The surprising and advantageous dimensional stability is also desirable, for example, for desalination applications, humidity regulation devices, battery separators, fuel cell exchange membranes, medical tubing applications, and various

electrically driven ion-transport processes.

In some embodiments, the water uptake value of a modified block copolymer is equal to or less than the water uptake value of a corresponding sulfonated block copolymer. In other embodiments, the water uptake value is less than 80% the water uptake value of the corresponding block copolymer. In further embodiments, the water uptake value is less than 50% the water uptake value of the corresponding block copolymer. In further embodiments, the water uptake value is less than 25% the water uptake value of the corresponding block copolymer.

Furthermore, in some embodiments, the water uptake value of the modified block copolymer is from 0% to 90% relative to the dry polymer. In other embodiments, the water uptake value of the modified block copolymer is from 0% to 75% relative to the dry polymer. In additional embodiments, the water uptake value of the modified block copolymer is from 0% to 50% relative to the dry polymer. In further embodiments, the water uptake value of the modified block copolymer is from 0% to 25% relative to the dry polymer. In still further embodiments, the water uptake value of the modified block copolymer is from 0% to 20% relative to the dry polymer. It will be understood by those skilled in the art that suitable ranges include any combination of the specified percentages even if the specific combination and range is not listed herewith.

In addition to being dimensionally stable, it has been found that the modified block copolymers, exhibit exceptional transport characteristics. In some embodiments, the modified block copolymers exhibit a high conductivity while, at the same time, having a high selectivity to transport anions.

The area resistance of a membrane can be determined by direct current (DC) measurements or by alternating current (AC) measurements. Resistance measured by DC is typically higher than resistance measured by AC, because resistance measured by DC includes boundary layer effect. Since the boundary layer effect always exists in the real application, resistance data from a DC method more closely represent the performance of the material in a practical application. For measuring membrane resistance, the potential drop between Haber-Luggin capillaries (in the art also referred to as Luggin or Luggin-Haber capillaries) is measured with and without the membrane as a function of the current density in an apparatus schematically shown in Figure 1. The resistance is given by the slope of the current vs. the voltage drop. To obtain the membrane resistance, the resistance without the membrane is subtracted from the resistance with the membrane. Figure 2 illustrates how to obtain membrane resistance. Membrane resistance is the difference in slope.

In some embodiments, the membranes of the modified block copolymers having a thickness of 20-45 $\mu$m exhibit an area resistance of no more than 5 $\Omega cm^2$. In further embodiments, the area resistance of the respective membranes is no more than 2.5 $\Omega cm^2$. In particular embodiments, the area resistance of the respective membranes is 1.0 $\Omega$cm2 or less. In very particular embodiments, the area resistance of the respective membranes is at most 0.85 $\Omega$cm2 or is at most 0.75 $\Omega cm^2$.

In some embodiments, the membranes of the modified block copolymers exhibit a conductivity of at least 0.5 mS/cm. In further embodiments, the conductivity of the membranes is at least 1 mS/cm, or is at least 1.5 mS/cm. In particular embodiments, the conductivity of the membranes is 2.0 mS/cm or higher, or is at least 3.0 mS/cm. In very particular embodiments, the conductivity of the membranes is at least 4.5 mS/cm.

In some embodiments, it has surprisingly been found that the membranes of the modified block copolymers are permselective. The permselectivity of the membranes can be determined as an "apparent" permselectivity based on the measurement of the potential gradient across a membrane which separates two electrolyte solutions having different electrolyte concentrations. Those of ordinary skill will appreciate that the apparent permselectivity is always larger than the permselectivity under practice conditions because the measurement fails to account for boundary layer effects. However, the difference between the measured permselectivity value and the permselectivity under practice conditions is generally small. Figure 3 schematically illustrates the experiment set-up for measuring the permselectivity. In the illustrative set-up of Figure 3, the electrolyte solution on one side of the membrane has a concentration of 0.5M KCl, and the electrolyte concentration is the solution on the other side of the membrane is 1M KCl. For a membrane with transport number of 1, the potential difference across the membrane should be 0.0158 volt. On this basis, the permselectivity of the actual membrane can be calculated according to following equation:

$$\text{Permselectivity (\%)} = \text{potential drop across membrane} / 0.0158$$

Of course, other solutions and concentrations can be used too. But corrections need to be made for different concentrations as well as for difference in ion mobility in solutions.

In some embodiments, the permselectivity of the modified block copolymers is similar to or better than the permselectivity of a corresponding sulfonated block copolymer. Accordingly, in some embodiments, the permselectivity of the modified block copolymers is at least 90% of that of a corresponding sulfonated block copolymer. In other embodiments, the permselectivity of the modified block copolymers is at least 95% of that of a corresponding sulfonated

block copolymer. In further embodiments, the permselectivity of the modified block copolymers is at least 98% of that of a corresponding sulfonated block copolymer. In particular embodiments, the permselectivity of the modified block copolymers is at least 100% of that of a corresponding sulfonated block copolymer. In very particular embodiments, the permselectivity of the modified block copolymers is at least 105% of that of a corresponding sulfonated block copolymer.

In some embodiments, the modified block copolymers have an anion exchange selectivity of at least 80%. On other embodiments, the anion exchange selectivity of the modified membranes is at least 85%. In further embodiments, the anion exchange selectivity of the modified block copolymers is at least 90%. In particular embodiments, the anion exchange selectivity of the modified block copolymers is at least 92%. In very particular embodiments, the anion exchange selectivity of the modified block copolymers is at least 95% or is at least 97%.

## 6. Applications of the Neutralized or Modified Block Copolymers

As previously mentioned herein, the neutralized sulfonated block copolymers may be compounded with other components not adversely affecting the copolymer properties. The neutralized block copolymers may be blended with a large variety of other polymers, including olefin polymers, styrene polymers, hydrophilic polymers and engineering thermoplastic resins, with polymer liquids and other fluids such as ionic liquids, natural oils, fragrances, and with fillers such as nanoclays, carbon, carbon black, carbon nanotubes, fullerenes, and traditional fillers such as talcs, and silica.

Additionally, the neutralized sulfonated block copolymers may be blended with conventional styrene/diene and hydrogenated styrene/diene block copolymers, such as the styrene block copolymers available from Kraton Polymers LLC. Illustrative styrene block copolymers include linear S-B-S, S-I-S, S-EB-S, S-EP-S block copolymers. Also included are radial block copolymers based on styrene along with isoprene and/or butadiene and selectively hydrogenated radial block copolymers. Particularly useful are blends with the block copolymer precursor, the block copolymer prior to sulfonation.

Olefin polymers include, for example, ethylene homopolymers, ethylene/alpha-olefin copolymers, propylene homopolymers, propylene/alpha-olefin copolymers, high impact polypropylene, butylene homopolymers, butylene/alpha-olefin copolymers, and other alpha-olefin copolymers or interpolymers. Representative polyolefins include, for example, but are not limited to, substantially linear ethylene polymers, homogeneously branched linear ethylene polymers, heterogeneously branched linear ethylene polymers, including linear low density polyethylene (LLDPE), ultra or very low density polyethylene (ULDPE or VLDPE), medium density polyethylene (MDPE), high density polyethylene (HDPE) and high pressure low density polyethylene (LDPE). Other polymers included hereunder are ethylene/acrylic acid (EEA) copolymers, ethylene/methacrylic acid (EMAA) ionomers, ethylene/vinyl acetate (EVA) copolymers, ethylene/vinyl alcohol (EVOH) copolymers, ethylene/cyclic olefin copolymers, polypropylene homopolymers and copolymers, propylene/styrene copolymers, ethylene/propylene copolymers, polybutylene, ethylene carbon monoxide interpolymers (for example, ethylene/carbon monoxide (ECO) copolymer, and ethylene/acrylic acid/carbon monoxide terpolymer). Still other polymers included hereunder are polyvinyl chloride (PVC) and blends of PVC with other materials.

Styrene polymers include, for example, crystal polystyrene, high impact polystyrene, medium impact polystyrene, styrene/acrylonitrile copolymers, styrene/acrylonitrile/butadiene (ABS) polymers, syndiotactic polystyrene, sulfonated polystyrene and styrene/olefin copolymers. Representative styrene/olefin copolymers are substantially random ethylene/styrene copolymers, preferably containing at least 20, more preferably equal to or greater than 25%-wt. copolymerized styrene monomer.

Hydrophilic polymers include polymeric bases which are characterized as having an available pair of electrons for interaction with acids. Examples of such bases include polymeric amines such as polyethyleneamine, polyvinylamine, polyallylamine, and polyvinylpyridene; polymeric analogs of nitrogen containing materials such as polyacrylamide, polyacrylonitrile, nylons, ABS, and polyurethanes; polymeric analogs of oxygen containing compounds such as polymeric ethers, esters, and alcohols; and acid-base hydrogen bonding interactions when combined with glycols such as polyethylene glycol, and polypropylene glycol, polytetrahydrofuran, esters (including polyethylene terephthalate, polybutyleneterephthalate, and aliphatic polyesters), and alcohols (including polyvinylalcohol), poly saccharides, and starches. Other hydrophilic polymers that may be utilized include sulfonated polystyrene.

Hydrophilic liquids such as ionic liquids may be combined with the neutralized block copolymers of the present disclosure to form swollen conductive films or gels. Ionic liquids such as those described in US 5,827,602 and US 6,531,241 may be introduced into the neutralized sulfonated polymers either by swelling a previously cast membrane, or by adding to the solvent system prior to casting a membrane, coating or film, or prior to or during thermoforming.

Illustrative materials that may be used as additional components include, without limitation: (1) pigments, antioxidants, stabilizers, surfactants, waxes, and flow promoters; (2) particulates, fillers and oils; and (3) solvents and other materials added to enhance processability and handling of the composition.

Additives such as pigments, antioxidants, stabilizers, surfactants, waxes and flow promoters, when utilized in combination with the neutralized sulfonated block copolymers may be included in amounts up to and including 10%-wt., i.e., from 0 to 10%, based on the total weight of the composition. When any one or more of these components are

present, they may be present in an amount from 0.001 to 5%-wt., and more preferably from 0.001 to 1%-wt.

Particulates, fillers and oils may be present in an amount up to and including 50%-wt., from 0 to 50% based on the total weight of the composition. When any one or more of these components are present, they may be present in an amount from 5 to 50%-wt., preferably from 7 to 50%-wt.

It will be understood by those having ordinary skill in the art that the amount of solvents and other materials added to enhance processability and handling of the composition will in many cases depend upon the particular composition formulated as well as the solvent and/or other material added. Typically such amount will not exceed 50%, based on the total weight of the composition.

The modified sulfonated block copolymers described herein can be employed in a variety of applications and end uses, and their property profile renders them particularly suited as materials in applications which require high modulus when immersed in water, good wet strength, good dimensional stability, good water and ion transport characteristics, good methanol resistance, easy film or membrane formation, good barrier properties, controlled flexibility and elasticity, adjustable hardness, and thermal/oxidative stability.

In one embodiment of the present invention, the modified sulfonated block copolymers may be used in electrochemical applications, such as in fuel cells (separator phase), proton exchange membranes for fuel cells, dispersions of metal impregnated carbon particles in sulfonated polymer cement for use in electrode assemblies, including those for fuel cells, water electrolyzers (electrolyte), acid batteries (electrolyte separator), super capacitors (electrolyte), separation cell (electrolyte barrier) for metal recovery processes, and sensors (particularly for sensing humidity). The modified sulfonated block copolymers are also used as desalination membranes, and in coatings on porous membranes. Their selectivity in transporting gases makes them useful for gas separation applications. Additionally, the modified sulfonated block copolymers are used in protective clothing and breathable fabric applications where the membranes, coated fabrics, and fabric laminates could provide a barrier of protection from various environmental elements (wind, rain, snow, chemical agents, biological agents) while offering a level of comfort as a result of their ability to rapidly transfer water from one side of the membrane or fabric to the other, e.g., allowing moisture from perspiration to escape from the surface of the skin of the wearer to the outside of the membrane or fabric and vice versa. Full enclosure suits made from such membranes and fabrics may protect first responders at the scene of an emergency where exposure to smoke, a chemical spill, or various chemical or biological agents are a possibility. Similar needs arise in medical applications, particularly surgery, where exposure to biological hazards is a risk. Surgical gloves and drapes fabricated from these types of membranes are other applications that could be useful in a medical environment. Articles fabricated from these types of membranes could have antibacterial and/or antiviral and/or antimicrobial properties as reported in US 6,537,538, US 6,239,182, US 6,028,115, US 6,932,619 and US 5,925,621 where it is noted that polystyrene sulfonates act as inhibitory agents against HIV (human immunodeficiency virus) and HSV (herpes simplex virus). In personal hygiene applications, a membrane or fabric of the present invention that would transport water vapor from perspiration while providing a barrier to the escape of other bodily fluids and still retain its strength properties in the wet environment would be advantageous. The use of these types of materials in diapers and adult incontinence constructions would be improvements over existing technologies.

Accordingly, in some embodiments, the modified sulfonated block copolymers described herein are particularly employed as materials for water vapor transporting membranes which are employed in wet or aqueous environments. Such membranes are, for example useful in fuel cells, filtration devices, devices for controlling humidity, devices for forward electrodialysis, devices for reverse electrodialysis, devices for pressure retarded osmosis, devices for forward osmosis, devices for reverse osmosis, devices for selectively adding water, devices for selectively removing water, devices for capacitive deionization, devices for molecular filtration, devices for removing salt from water, devices for treating produced water from hydraulic fracturing applications, devices for ion transport applications, devices for softening water, and batteries.

Membranes comprising the modified block copolymers may exhibit anionic, cationic or bipolar characteristics.

In some embodiments, the modified block copolymers are particularly advantageously employed in a membrane for an electro-deionization assembly which comprises at least one anode, at least one cathode, and one or more membranes. Electro-deionization assemblies include, in particular, desalination cells. An illustrative representation of a desalination cell is set forth in Figure 5.

To be useful in an electrically driven desalination application, a membrane which transports cations is needed to transport ions that are attracted to the negatively charged electrode. This membrane must reject anions (cationic membrane). Each cell also needs a membrane which transports anions in the direction of the positively charged electrode (anionic membrane). It is important that the anionic membrane does not transport cations; a high level of selectivity for anions is important for the efficient use of electricity in these devices. In addition to being well matched to the cationic membrane in electrical properties, the anionic membrane also must be similar to the cationic membrane in mechanical properties, as well.

In some embodiments, the membranes comprising the modified block copolymer are particularly suited as anionic membranes. In particular applications the anionic membranes comprising the modified block copolymer may

advantageously be paired with at least one cationic membrane.

Particular cationic membranes which are suited to be paired with the anionic membranes comprising the modified block copolymer are cation-exchange membranes which comprises a sulfonated block copolymer comprising at least two polymer end blocks A and at least one polymer interior block B, wherein each A block contains essentially no sulfonic acid or sulfonated ester functional groups and each B block comprises sulfonation susceptible monomer units and, based on the number of the sulfonation susceptible monomer units, from 10 to 100 mol% of sulfonic acid or sulfonate ester functional groups. Such cation-exchange membranes preferably comprise a sulfonated block copolymer as used for the preparation of the modified block copolymer and as herein-above described.

In some embodiments, the membranes comprising the modified block copolymer are particularly suited as bipolar membranes, i.e., membranes which allow the transport of anions as well as cations without transporting electrons. Bipolar membranes are especially useful in electro-dialysis processes such as water splitting which efficiently converts aqueous salt solutions into acids and bases.

## 7. Examples

The following examples are intended to be illustrative only, and are not intended to be, nor should they be construed as, limiting the scope of the present invention in any way.

### a. Materials and Methods

The tensile modulus in the dry state as described herein was measured according to ASTM D412.

The tensile modulus in the wet state as described herein was measured similar to the method according ASTM D412 using samples that had been equilibrated under water for a period of 24 hours prior to testing, and that were fully submerged under water for testing.

All tensile data were collected in a climate controlled room at 74°F (23.3°C) and 50% relative humidity.

The melt flow index (MFI) as described herein was measured according to ASTM 1238 at 230°C and a load of 5 kg.

The % swelling as reported on the materials representative of the present disclosure was measured as follows. A dry swatch of film measuring approximately 9 $in^2$ was weighed and then placed in a jar with approximately 250mL of distilled water. The swatch was allowed to hydrate for a period of at least 16 hrs. The swatch was then removed from the jar, both surfaces were blotted dry with an absorbent wipe for a period of several seconds, and the swatch was re-weighed. % swelling was calculated from the difference in the wet and dry weights divided by the original dry weight and multiplied by 100. Samples were run at least in duplicate.

The WVTR as described herein was measured similar to ASTM E 96/E96M. The ASTM method was modified by using a smaller vial, employing 10 ml of water, and having an area of exposed membrane of 160 mm2 (as opposed to 1000 $mm^2$ according to the ASTM method). After adding the water and sealing the vial with the membrane test specie, the vial was inverted, and air having a temperature of 25°C and a relative humidity of 50% was blown across the membrane. Weight loss was measured versus time, and the water transport rate was calculated on the basis of the measurements as $g/m^2$day. Measurements were typically taken over a period of 6-8 hours with multiple data points to insure linear transport behavior.

The degree of sulfonation as described herein and as determined by titration was measured by the following potentiometric titration procedure. The non-neutralized sulfonation reaction product solution was analyzed by two separate titrations (the "two-titration method") to determine the levels of styrenic polymer sulfonic acid, sulfuric acid, and non-polymeric by-product sulfonic acid (2-sulfoisobutyric acid). For each titration, an aliquot of about five (5) grams of the reaction product solution was dissolved in about 100 mL of tetrahydrofuran and about 2 mL of water and about 2 mL of methanol were added. In the first titration, the solution was titrated potentiometrically with 0.1 N cyclohexylamine in methanol to afford two endpoints; the first endpoint corresponded to all sulfonic acid groups in the sample plus the first acidic proton of sulfuric acid, and the second endpoint corresponded to the second acidic proton of sulfuric acid. In the second titration, the solution was titrated potentiometrically with 0.14 N sodium hydroxide in about 3.5:1 methanol:water to afford three endpoints: The first endpoint corresponded to all sulfonic acid groups in the sample plus the first and second acidic proton of sulfuric acid; the second endpoint corresponded to the carboxylic acid of 2-sulfoisobutyric acid; and the third endpoint corresponded to isobutyric acid.

The selective detection the of the second acidic proton of sulfuric acid in the first titration, together with the selective detection of the carboxylic acid of 2-sulfoisobutyric acid in the second titration, allowed for the calculation of acid component concentrations.

The degree of sulfonation as described herein and as determined by 1H-NMR was measured using the following procedure. About two (2) grams of non-neutralized sulfonated polymer product solution was treated with several drops of methanol and the solvent was stripped off by drying in a 50°C vacuum oven for approximately 0.5 hours. A 30 mg

sample of the dried polymer was dissolved in about 0.75 mL of tetrahydrofuran-d8 (THF-d8), to which was then added with a partial drop of concentrated H2SO4 to shift interfering labile proton signals downfield away from aromatic proton signals in subsequent NMR analysis. The resulting solution was analyzed by 1H-NMR at about 60°C. The percentage styrene sulfonation was calculated from the integration of 1H-NMR signal at about 7.6 part per million (ppm), which corresponded to one-half of the aromatic protons on sulfonated styrene units; the signals corresponding to the other half of such aromatic protons were overlapped with the signals corresponding to non-sulfonated styrene aromatic protons and tert-butyl styrene aromatic protons.

The ion exchange capacity as described herein was determined by the potentiometric titration method described above and was reported as milliequivalents of sulfonic acid functionality per gram of sulfonated block copolymer.

The formation of micelles was confirmed by particle size analysis on a Malvern Zetasizer Nano Series dynamic light scattering instrument, model number ZEN3600, available from Malvern Instruments Limited, UK, using polymer sample solutions diluted to a concentration of about 0.5 to 0.6%-wt. with cyclohexane. The diluted polymer solution samples were placed in a 1 cm acrylic cuvette and subjected to the instrument's general purpose algorithm for determination of size distribution as a function of intensity (see A.S. Yeung and C. W. Frank, Polymer, 31, pages 2089-2100 and 2101-2111 (1990)).

The area resistance can be determined by direct current (DC) measurements or by alternating current (AC) measurements. Resistance measured by DC is typically higher than resistance measured by AC, because resistance measured by DC includes boundary layer effects. Since boundary layer effects always exist in praxis, resistance data from DC method more closely represent the praxis performance.

The membrane resistance was measured by a direct current method using a set-up as illustrated in Figure 1. The potential drop between the Haber-Luggin capillaries was measured with and without the membrane as a function of the current density. The resistance was determined from the slope of voltage vs. current. To obtain the membrane resistance, the resistance without the membrane was subtracted from the resistance with the membrane. Figure 2 illustrates how to obtain membrane resistance. Membrane resistance is the difference in the slopes.

Membrane area resistance is dependent on thickness. Therefore, area resistance of membranes which differ in thickness cannot be compared. To obtain true membrane properties, membrane conductivity is often used. Membrane conductivity was calculated by dividing the membrane thickness by membrane area resistance.

"True" membrane permselectivity should be based on the measurement of ion concentration changes of both concentrate and dilute solutions by measuring the amount of current passing through the electrodialysis system. But this method is time consuming.

An alternative method is measuring "apparent" permselectivity, which is based on the measurement of the potential gradient across a membrane separating two electrolyte solutions of different concentrations. It is worthy to point out that the apparent permselectivity is always larger than the real permselectivity because it does not take boundary layer effects into account. However, the difference is generally small. The experiment set-up is schematically shown in Figure 3.

The potential between two electrolyte solutions of different concentrations, i.e. membrane potential ($\varphi_m$) was measured using a voltmeter. Membrane potential ($\varphi_m$) can be expressed by the following equation:

$$\varphi_{\mathrm{m}} = (2T_{cou} - 1)\frac{RT}{F}\,Ln\frac{\mathrm{a1}}{\mathrm{a2}}$$

where $T_{cou}$ is the membrane transport number of the counter-ions, a1 and a2 are the activity of the two $KC_1$ solutions, R is the gas constant, and T is the temperature, and F is the Faraday constant. For a strictly permselective membrane (where $T_{cou}$ is 1), membrane potential is following:

$$\varphi_{\mathrm{m,\,sp}} = \frac{RT}{F}\,Ln\frac{\mathrm{a1}}{\mathrm{a2}}$$

The apparent permselectivity of a membrane ($\psi$), when measured in KCl solutions, is given by the following equation:

$$\psi = \frac{\varphi_m}{\varphi_{m,sp}}$$

In the example above, one side of the membrane is 0.1M KCl, the other side of the membrane is 0.5M KCl, and $\varphi_{m,sp}$ is 36.2 mV. Therefore, the apparent permselectivity of a membrane can be calculated according to following

equation:

$$\psi = \frac{Measured\ \varphi_m\ in\ mV}{36.2\ mV}$$

Of course, other solutions and concentrations can be used too. But corrections need to be made for different concentrations as well as for difference in ion mobility in solutions.

The experimental set-up for measuring salt permeability is shown in the Figure 4. The membrane was sandwiched between two cells: donor cell and receiving cell. The donor cell contained a salt solution with known concentration, and the receiving cell contained pure water at the start of the experiment. As salt permeated through the membrane from the donor cell to the receiving cell, the salt concentration in the receiving cell increased, and it was monitored by a conductivity probe over the time.

Salt permeability can be deducted from following equation, where Ps is the salt permeability, t is the time, VR is the volume of the cells, δ is the membrane thickness, A is the membrane area, CD[0] is the starting salt concentration in the donor cell, and $C_R$[t] is the salt concentration over the testing time in the receiving cell.

$$\ln\left[1-\frac{2c_R[t]}{c_D[0]}\right]\left(\frac{-V_R\delta}{2A}\right)=P_s\,t$$

For some membranes, $P_s$ is dependent on the starting salt concentration ($C_D$[0]), therefore, $C_D$[0] is often reported along with $P_s$. In our test, $C_D$[0] was 2000 ppm $NaC_1$. The experiment set-up for measuring the permeability is schematically shown in Figure 4.

b. Preparation Examples

*Preparation of Sulfonated Block Copolymers:*

A pentablock copolymer having the configuration A-D-B-D-A was prepared by sequential anionic polymerization where the A blocks are polymer blocks of para-tertbutylstyrene (ptBS), the D blocks were comprised of polymer blocks of hydrogenated isoprene (Ip), and the B blocks werere comprised of polymer blocks of unsubstituted styrene (S). Anionic polymerization of the t-butylstyrene in cyclohexane was inititated using sec-butyllithium affording an A block having a molecular weight of 15,000 g/mol. Isoprene monomers were then added to afford a second block with a molecular weight of 9,000 g/mol (ptBS-Ip-Li). Subsequently, styrene monomer was added to the living (ptBS-Ip-Li) diblock copolymer solution and was polymerized to obtain a living triblock copolymer (ptBS-Ip-S-Li). The polymer styrene block was comprised only of polystyrene having a molecular weight of 28,000 g/mol. To this solution was added another aliquot of isoprene monomer resulting in an isoprene block having a molecular weight of 11,000 g/mol. Accordingly, this afforded a living tetrablock copolymer structure (ptBS-Ip-S-Ip-Li). A second aliquot of para-tert butyl styrene monomer was added, and polymerization thereof was terminated by adding methanol to obtain a ptBS block having a molecular weight of about 14,000 g/mol. The ptBS-Ip-S-Ip-ptBS was then hydrogenated using a standard $Co_2$+/triethylaluminum method to remove the C=C unsaturation in the isoprene portion of the pentablock. The block polymer was then sulfonated directly (without further treatment, not oxidizing, washing, nor "finishing") using an i-butyric anhydride/sulfuric acid reagent. The hydrogenated block copolymer solution was diluted to about 10% solids by the addition of heptane (roughly an equal volume of heptane per volume of block copolymer solution). Sufficient i-butyric anhydride and sulfuric acid (1/1 (mol/mol)) were added to afford 2.0 meq of sulfonated polystyrene functionality per g of block copolymer. The sulfonation reaction was terminated by the addition of ethanol (2 mol ethanol/mol of i-butyric anhydride). The resulting sulfonated block copolymer was found, by potentiometric titration, to have an "Ion Exchange Capacity (IEC)" of 2.0 meq of-$SO_3H$/g of polymer. The solution of sulfonated polymer had a solids level of about 10% wt/wt in a mixture of heptane, cyclohexane, and ethyl i-butyrate. The sulfonated block copolymer is hereinafter referred to as SBC-2.0.

Corresponding solutions of a sulfonated block copolymer having an IEC of 1.5 meq of - $SO_3H$/g of polymer (SBC-1.5) and of a sulfonated block copolymer having an IEC of 1.0 meq of -$SO_3H$/g of polymer (SBC-1.0) can be prepared in a similar manner.

*Reparation of Neutralized Block Copolymers:*

In a representative experiment, 80g of a solution having 11% of SBC-2.0 polymer (and accordingly about 17.6

meq of $-SO_3H$) was mixed with an amine in the amounts indicated below.

The solution was cast into a film and dried. The dried film was soaked in deionized water for at least 4 hours, and the deionized water was replaced at least one during that period. Thereafter, the film was dried in vacuum at 50°C for at least 4 hours.

Further particulars as well as the melt flow index of representative neutralized sulfonated block copolymers are listed in the following Table 1:

TABLE 1

| Example No. | Name | $MW_{cal}$ (g/mol) | Amount (g) | MFI (g/10 min) |
|---|---|---|---|---|
| 1 | pyridine | 79.10 | 1.46 | 1.85 |
| 2 | imidazole | 68.08 | 1.26 | 1.34 |
| 3 | 2-methylpyrrolidine | 85.15 | 1.57 | 1.99 |
| 4 | pyrrolidine | 71.12 | 1.31 | 1.28 |
| 5 | butylamine | 73.14 | 1.35 | 1.46 |
| 6 | JeffAmine® M600 | 600 | 11.9 | nd |
| 7 | diethylamine | 73.14 | 1.35 | 2.83 |
| 8 | triethylamine | 101.19 | 1.87 | 2.67 |
| 9 | pyrazole | 68.08 | 1.26 | 5.24 |
| 10 | 2-picoline | 93.13 | 1.72 | 2.62 |
| 11[(a)] | 1-methylimidazole | 82.10 | 1.52 | 10.00 |
| 12 | 1-butylimidazole | 124.10 | | nd |
| 13[(b)] | 1-butylimidazole | 124.10 | | nd |
| C1 | SBC-2.0 | nd | na | does not flow |
| C2 | ethylenediamine | 60.10 | 1.11 | does not flow |
| C3 | ethylenediamine | 60.10 | 0.56 | does not flow |
| C4 | 1,4-diaminobutane | 88.15 | 1.63 | does not flow |
| C5 | 1,4-diaminobutane | 88.15 | 0.81 | does not flow |

[(a)] The sample was not soaked in water and dried in vacuum prior to measuring the MFI
[(b)] Obtained in a corresponding manner but using SBC-1.0
nd = not determined; na = not applicable

c) Processing Examples and Properties

The modified block copolymer of Example No. 11 was melt-pressed into a first sheet (113 microns). The sheet had a moisture transmission rate (inverted cup) of 3200 $g/m^2$ day at 50% relative humidity and 25°C.

A second melt-pressed sheet of the modified block copolymer of Example No. 11 (96 microns) had a moisture vapor transmission rate (upright cup) of 350 $g/m^2$ day at 50% relative humidity and 25°C.

The melt-pressed sheets were soaked in 10% sulfuric acid and washed with deionized water to restitute the sulfonated block copolymer. A first restituted film (87 microns) exhibited a moisture transmission rate (inverted cup) of 12,900 $g/m^2$ day at 50% relative humidity and 25°C. A second restituted film (91 microns) exhibited a moisture transmission rate (inverted cup) of 530 $g/m^2$ day at 50% relative humidity and 25°C.

Table 2 summarizes data regarding film made from the modified block copolymer according to Example No. 11 by way of solution casting and by way of melt processing.

TABLE 2

| | Example No. 11 | |
|---|---|---|
| | Solution Cast Film | Melt-Processed Film |
| Elongation @ Yield (%) | 5 | 4 |
| Tensile @ Yield (psi) | 2,500 | 1,200 |
| Elongation @ Break (%) | 160 | 300 |
| Tensile @ Break (psi) | 2,300 | 1,800 |

**Claims**

**1.** A method of producing a shaped article which comprises:

i) providing a composition comprising an amine neutralized sulfonated block copolymer having a melt flow index of at least 0.5 g/10 min at 230°C and 5 kg load according to ASTM 1238, comprising at least two polymer end blocks A and at least one polymer interior block B, wherein
each A block contains essentially no sulfonic acid or sulfonate functional groups and
each B block comprises sulfonation susceptible monomer units and from 10 to 100 mol% sulfonic acid or sulfonate ester functional groups based on the number of the sulfonation susceptible monomer units, and wherein the sulfonic acid or sulfonate ester functional groups are partially or completely neutralized by an amine, wherein the amine is of formula (I)

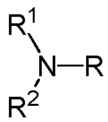
(I)

wherein

R and $R^1$, each independently, represents hydrogen or a hydrocarbon group, and
$R^2$ represents a hydrocarbon group that can be straight chain, branched, or cyclic and can be saturated, partially unsaturated or aromatic, or
R and $R^1$, each independently represent hydrogen or a hydrocarbon group, and $R^2$ represents a group

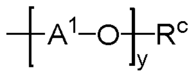

wherein

$A^1$ in each case independently, is a straight chain or branched alkylene moiety,
$R^c$ is an alkyl, and
y is a number from about 2 to about 100, or
$R^1$ and $R^2$, together with the nitrogen to which they are bonded form an optionally substituted hetero cycle consisting of carbon and nitrogen, wherein the amine is of formula (Ia)

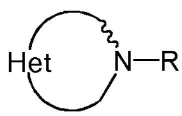
(Ia)

wherein
 represents a single or double bond
R is absent when  represents a double bond, or is hydrogen or a hydrocarbon group when  represents a single bond, and

Het together with the nitrogen to which it is bonded represents an optionally substituted 5- or 6-membered hetero cycle having, in addition to the nitrogen ring member, 4 or 5 ring members selected from the group consisting of at least 2 and at most 5 carbon ring members, and 0 to 3 nitrogen ring members;

ii) heating the composition to a temperature at which the amine neutralized sulfonated block copolymer is moldable,
iii) shaping the composition obtained in (ii), by thermal methods including molding and melt processing;
iv) cooling the shaped composition obtained in (iii), and
v) optionally converting the amine neutralized sulfonic acid or sulfonate ester functional groups present in the cooled and shaped article into $-SO_3H$ group(s).

**2.** The method of claim 1, wherein from 85 to 100% of the sulfonic acid or sulfonate ester functional groups are neutralized by the amine.

**3.** A shaped article made by a thermal method including molding and melt processing, obtained by the method of claim 1, wherein the sulfonated block copolymer is neutralized with an amine of formula (I) or (I)a wherein $R^1$ and $R^2$, together with the nitrogen to which they are bonded form an optionally substituted hetero cycle consisting of carbon and nitrogen ring members.

**4.** The shaped article of claim 3 which is in form of a sheet, fiber, or hollow body.

**5.** The shaped article of claim 4 which is in form of a membrane or film.

**6.** The membrane or film of claim 5 which has at least one of the characteristics (a), (b) and (c):

(a) a conductivity of at least 5 mS/cm;
(b) an anion exchange selectivity of at least 80%;
(c) a water absorption capacity of at most 20% by weight, based on the dry weight of the article.

**7.** An apparatus selected from the group consisting of fuel cells, filtration devices, devices for controlling humidity, devices for forward electrodialysis, devices for reverse electrodialysis, devices for pressure retarded osmosis, devices for forward osmosis, devices for reverse osmosis, devices for selectively adding water, devices for selectively removing water, devices for capacitive deionization, devices for molecular filtration, devices for removing salt from water, devices for treating produced water from hydraulic fracturing applications, devices for ion transport applications, devices for softening water, and batteries, and comprising the shaped article of claim 3.

**8.** An electro-deionization assembly comprising at least one anode, at least one cathode, and one or more membrane(s) wherein at least one membrane is the membrane of claim 5.

**9.** An article comprising a substrate and a coating, wherein the coating is the membrane or film of claim 5.

**10.** The article of claim 9, wherein the substrate is a natural or synthetic, woven or nonwoven material, or a mixture of two or more thereof.

## Patentansprüche

**1.** Verfahren zur Herstellung eines geformten Gegenstandes, welches umfasst:

i) Vorsehen einer Zusammensetzung, umfassend ein Amin-neutralisiertes, sulfoniertes Blockcopolymer mit einem Schmelzflussindex von mindestens 0,5 g/10 min bei 230 °C und 5 kg Last gemäß ASTM 1238, umfassend mindestens zwei Polymerendblöcke A und mindestens einen Polymerinnenblock B, wobei jeder A-Block im Wesentlichen keine Sulfonsäure- oder Sulfonat-funktionelle Gruppen enthält und
jeder B-Block einer Sulfonierung zugängliche Monomereinheiten und 10 bis 100 Mol-% Sulfonsäure- oder Sulfonatester-funktionelle Gruppen umfasst, basierend auf der Anzahl der einer Sulfonierung zugänglichen Monomereinheiten, und
wobei die Sulfonsäure- oder Sulfonatester-funktionellen Gruppen teilweise oder vollständig durch ein Amin

neutralisiert sind,
wobei das Amin die Formel (I) besitzt

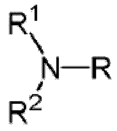

(I)

worin

R und $R^1$ jeweils unabhängig Wasserstoff oder eine Kohlenwasserstoffgruppe bedeuten, und
$R^2$ eine Kohlenwasserstoffgruppe bedeutet, die geradkettig, verzweigt oder zyklisch und gesättigt, teilweise ungesättigt oder aromatisch sein kann, oder
R und $R^1$ jeweils unabhängig Wasserstoff oder eine Kohlenwasserstoffgruppe bedeuten und $R^2$ eine Gruppe bedeutet

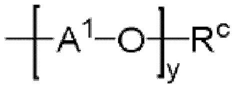

worin

$A^1$ in jedem Fall unabhängig eine geradkettige oder verzweigte Alkyleneinheit ist,
$R^c$ ein Alkyl ist, und
y eine Zahl von etwa 2 bis etwa 100 ist, oder
$R^1$ und $R^2$ zusammen mit dem Stickstoff, an den sie gebunden sind, einen wahlweise substituierten Heterozyklus bilden, bestehend aus Kohlenstoff und Stickstoff, wobei das Amin die Formel (Ia) besitzt

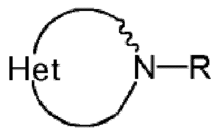

(Ia)

worin

 eine Einfach- oder Doppelbindung bedeutet,
R abwesend ist, wenn  eine Doppelbindung bedeutet, oder Wasserstoff oder eine Kohlenwasserstoffgruppe ist, wenn  eine Einfachbindung bedeutet, und
Het zusammen mit dem Stickstoff, an das es gebunden ist, einen wahlweise substituierten 5- oder 6-gliedrigen Heterozyklus bedeutet, der, zusätzlich zu dem Stickstoffringelement, 4 oder 5 Ringelemente besitzt, gewählt aus der Gruppe, bestehend aus mindestens 2 und höchstens 5 Kohlenstoffringelementen und 0 bis 3 Stickstoffringelementen;

ii) Erhitzen der Zusammensetzung auf eine Temperatur, bei der das Aminneutralisierte, sulfonierte Blockcopolymer formbar ist,
iii) Formung der in ii) erhaltenen Zusammensetzung durch thermische Verfahren einschließlich Formpressen und Schmelzverarbeitung;
iv) Kühlen der in iii) erhaltenen, geformten Zusammensetzung, und
v) wahlweise Umwandeln der Amin-neutralisierten Sulfonsäure- oder Sulfonatester-funktionellen Gruppen, die in dem abgekühlten und geformten Gegenstand vorliegen, in $-SO_3H$-Gruppe(n).

**2.** Verfahren nach Anspruch 1, wobei 85 bis 100 % der Sulfonsäure- oder Sulfonatester-funktionellen Gruppen durch das Amin neutralisiert werden.

**3.** Geformter Gegenstand, hergestellt durch ein thermisches Verfahren einschließlich Formpressen und Schmelzverarbeitung, erhalten durch das Verfahren nach Anspruch 1, wobei das sulfonierte Blockcopolymer mit einem Amin der Formel (I) oder (Ia) neutralisiert ist, worin $R^1$ und $R^2$ zusammen mit dem Stickstoff, an welche sie gebunden

sind, einen wahlweise substituierten Heterozyklus bilden, bestehend aus Kohlenstoff- und Stickstoffringelementen.

4. Geformter Gegenstand nach Anspruch 3, welcher in Form einer Folie, Faser oder eines Hohlkörpers vorliegt.

5. Geformter Gegenstand nach Anspruch 4, welcher in Form einer Membran oder eines Films vorliegt.

6. Membran oder Film nach Anspruch 5, welche/welcher mindestens eine der Charakteristiken (a), (b) und (c) aufweist.

(a) eine Leitfähigkeit von mindestens 5 mS/cm;
(b) eine Anionenaustauschselektivität von mindestens 80 %;
(c) eine Wasserabsorptionskapazität von höchstens 20 Gew.-%, basierend auf dem Trockengewicht des Gegenstandes.

7. Vorrichtung, gewählt aus der Gruppe, bestehend aus Brennstoffzellen, Filtrationsvorrichtungen, Vorrichtungen zur Feuchtigkeitsregulierung, Vorrichtungen für die Vorwärts-Elektrodialyse, Vorrichtungen für die Umkehr-Elektrodialyse, Vorrichtungen für druckverzögerte Osmose, Vorrichtungen für Vorwärts-Osmose, Vorrichtungen für Umkehr-Osmose, Vorrichtungen für selektive Wasserzugabe, Vorrichtungen für selektive Wasserentfernung, Vorrichtungen für kapazitive Deionisation, Vorrichtungen für Molekularfiltration, Vorrichtungen zur Entfernung von Salz aus Wasser, Vorrichtungen zur Behandlung von erzeugtem Wasser aus hydraulischen Frakturierungsanwendungen, Vorrichtungen für Ionentransportanwendungen, Vorrichtungen zum Weichmachen von Wasser, und Batterien, und umfassend den geformten Gegenstand nach Anspruch 3.

8. Elektro-Deionisations-Aufbau, umfassend mindestens eine Anode, mindestens eine Kathode, und eine oder mehr Membran(en), wobei mindestens eine Membran die Membran nach Anspruch 5 ist.

9. Gegenstand, umfassend ein Substrat und eine Beschichtung, wobei die Beschichtung die Membran oder der Film nach Anspruch 5 ist.

10. Gegenstand nach Anspruch 9, wobei das Substrat ein natürliches oder synthetisches, gewebtes oder nicht gewebtes Material oder eine Mischung aus zwei oder mehr davon ist.

## Revendications

1. Procédé de fabrication d'un article moulé comprenant les étapes consistant à :

i) produire une composition comprenant un copolymère à blocs sulfoné neutralisé par une amine dont l'indice de fluidité à chaud est d'au moins 0,5 g/10 min à 230°C et une charge de 5 kg selon la norme ASTM 1238, comprenant au moins deux blocs de polymère terminaux A et au moins un bloc de polymère intérieur B, chaque bloc A ne contenant sensiblement aucun groupes fonctionnels acide sulfonique ou sulfonate et chaque bloc B comprenant des motifs monomères susceptibles de sulfonation et de 10 à 100% en moles de groupes fonctionnels acide sulfonique ou ester sulfonate sur la base du nombre de motifs monomères susceptibles de sulfonation et les groupes fonctionnels acide sulfonique ou ester sulfonate étant neutralisés partiellement ou totalement par une amine,
l'amine ayant la formule (I)

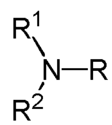

(I)

où

R et $R^1$ représentent chacun indépendamment un hydrogène ou un groupe hydrocarboné et
$R^2$ représente un groupe hydrocarboné qui peut être linéaire, ramifié ou cyclique et qui peut être saturé, partiellement insaturé ou aromatique, ou
R et $R^1$ représentent chacun indépendamment un hydrogène ou un groupe hydrocarboné, et

$R^2$ représente un groupe

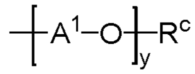

où

$A^1$ est, dans chaque cas indépendamment, une fraction alkylène ramifiée ou à chaîne linéaire,
$R^c$ est un alkyle, et
y est un nombre d'environ 2 à environ 100, ou
$R^1$ et $R^2$ forme, conjointement avec l'atome d'azote auquel ils sont liés, un cycle hétéro éventuellement substitué constitué de carbone et d'azote, l'amine ayant la formule (Ia)

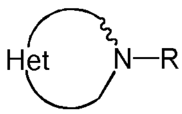
(Ia)

où

représente une liaison simple ou double,
R est absent lorsque représente une double liaison, ou représente un hydrogène ou un groupe hydrocarboné lorsque représente une liaison simple et
Het représente, conjointement avec l'atome d'azote auquel il est lié, un hétérocyclique à 5 ou 6 éléments éventuellement substitué, en plus de l'élément cyclique azoté, 4 ou 5 éléments choisis dans le groupe constitué d'au moins 2 et d'au plus 5 éléments cycliques carbonés, et 0 à 3 éléments cycliques azotés ;

ii) chauffer la composition à une température à laquelle le copolymère à blocs sulfoné neutralisé par une amine peut être moulé,
iii) mouler la composition obtenue en (ii) par des procédés thermiques comprenant le moulage et un traitement à l'état fondu ;
iv) refroidir la composition moulée obtenue en (iii), et
v) convertir éventuellement les groupes fonctionnels acide sulfonique ou ester sulfonate neutralisés par une amine, présents dans l'article moulé et refroidi, en un ou plusieurs groupes $-SO_3H$.

**2.** Procédé selon la revendication 1, dans lequel 85 à 100% des groupes fonctionnels acide sulfonique ou ester sulfonate sont neutralisés par l'amine.

**3.** Article moulé produit par un procédé thermique incluant le moulage ou le traitement à l'état fondu obtenu par le procédé selon la revendication 1, dans lequel le copolymère à blocs sulfoné est neutralisé avec une amine de la formule (I) ou (Ia) où $R^1$ et $R^2$ forment, conjointement avec l'azote auquel ils sont liés, un hétérocycle éventuellement substitué constitué d'éléments cycliques carbonés et azotés.

**4.** Article moulé selon la revendication 3, qui se présente sous la forme d'une feuille, d'une fibre ou d'un corps creux.

**5.** Article moulé selon la revendication 4, qui se présente sous la forme d'une membrane ou d'un film.

**6.** Membrane ou film selon la revendication 5, qui présente au moins l'une des caractéristiques (a), (b) et (c) :

(a) une conductivité d'au moins 5 mS/cm ;
(b) une sélectivité d'échange d'anions d'au moins 80% ;
(c) une capacité d'absorption d'eau d'au plus 20% en poids, sur la base du poids sec de l'article.

**7.** Appareil sélectionné dans le groupe constitué de piles à combustible, de dispositifs de filtration, de dispositifs de régulation de l'humidité, de dispositifs d'électrodialyse directe, de dispositifs d'électrodialyse inverse, de dispositifs d'osmose à retard de pression, de dispositifs d'osmose directe, de dispositifs d'osmose inverse, de dispositifs

d'adjonction sélective d'eau, de dispositifs d'élimination sélective d'eau, de dispositifs de dé-ionisation capacitive, de dispositifs de filtration moléculaire, de dispositifs d'élimination du sel de l'eau, de dispositifs de traitement de l'eau produite à partir d'applications de fracturation hydraulique, de dispositifs d'application de transport d'ions, de dispositifs d'adoucissement de l'eau et de batteries, et comprenant l'article moulé selon la revendication 3.

**8.** Ensemble de dé-ionisation électrique comprenant au moins une anode, au moins une cathode, et une ou plusieurs membranes, au moins une membrane étant la membrane de la revendication 5.

**9.** Article comprenant un substrat et un revêtement, dans lequel le revêtement est la membrane ou le film de la revendication 5.

**10.** Article selon la revendication 9, dans lequel le substrat est une matière tissée ou non tissée, naturelle ou synthétique, ou un mélange de deux ou plus de telles matières.

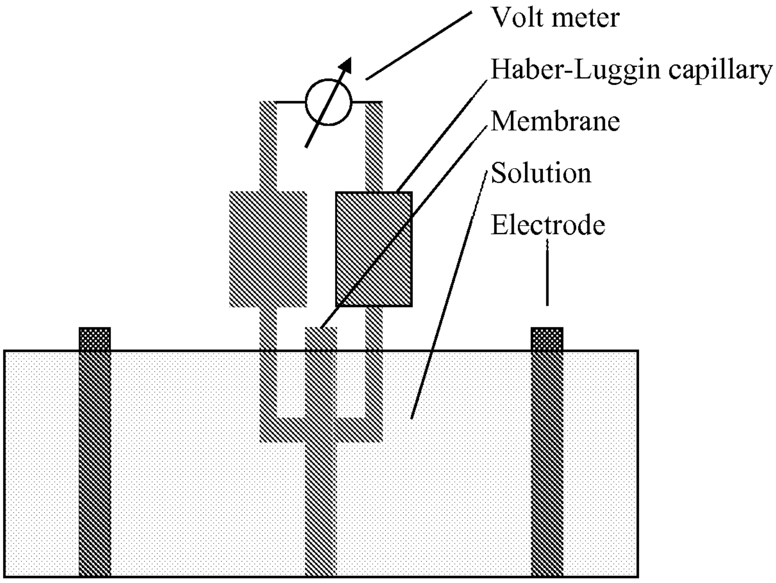
Volt meter
Haber-Luggin capillary
Membrane
Solution
Electrode

FIG. 1

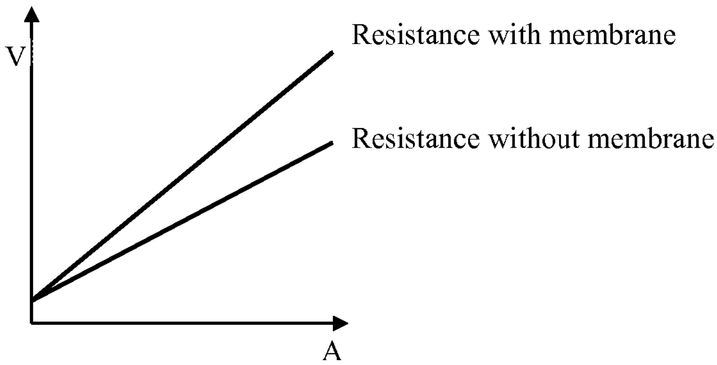
V
Resistance with membrane
Resistance without membrane
A

FIG. 2

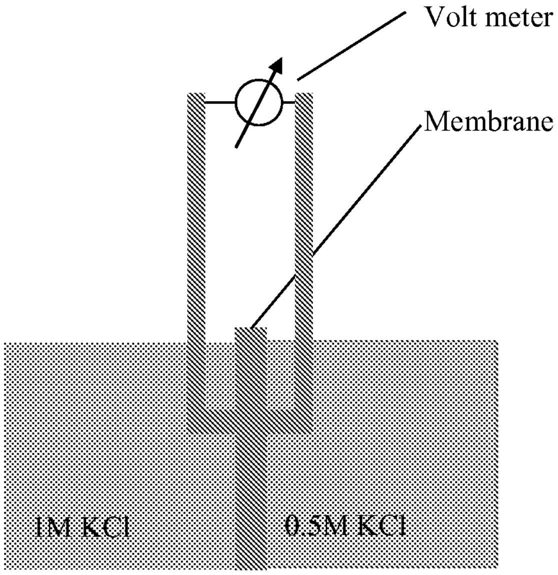
Volt meter
Membrane
1M KCl
0.5M KCl

FIG. 3

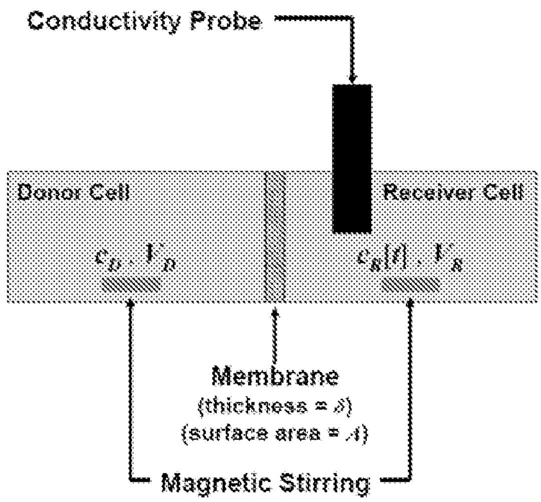
Conductivity Probe
Donor Cell
Receiver Cell
Membrane
(thickness = δ)
(surface area = A)
Magnetic Stirring

FIG. 4

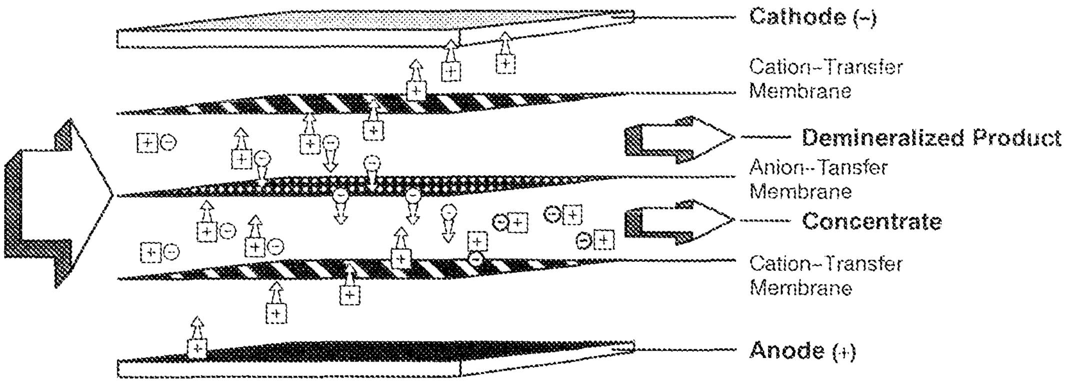
Cathode (-)
Cation-Transfer Membrane
Demineralized Product
Anion-Tansfer Membrane
Concentrate
Cation-Transfer Membrane
Anode (+)

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3577357 A, Winkler
- US 5468574 A
- US 7737224 B, Willis
- WO 2008089332 A, Dado
- WO 2009137678 A
- US 5239010 A, Pottick
- US 5516831 A, Balas
- US 20110086982 A, Willis
- US 4107131 A
- US 6391981 B
- US 6455651 B
- US 6492469 B
- US 6515083 B
- US 4946899 A
- US 3450795 A
- US 6699941 B
- US 3670054 A
- US 4107236 A
- US 6767976 B
- US 7169848 B
- US 13280823 B
- WO 200913768 A
- US 5827602 A
- US 6531241 B
- US 6537538 B
- US 6239182 B
- US 6028115 A
- US 6932619 B
- US 5925621 A


### Non-patent literature cited in the description


- **G.W. COATES ; P.D. HUSTAD ; S. REINARTZ.** *Angew. Chem. Int. Ed.,* 2002, vol. 41, 2236-2257
- **H. ZHANG ; K. NOMURA.** *J. Am. Chem. Soc. Commun.,* 2005
- **C.J. HAWKER ; A.W. BOSMAN ; E. HARTH.** *Chem. Rev.,* 2001, vol. 101 (12), 3661-3688
- **A.S. YEUNG ; C. W. FRANK.** *Polymer,* 1990, vol. 31, 2089-2100, 2101-2111